(19) Europäisches Patentamt
European Patent Office
Office européen des brevets

(11) EP 4 582 483 A1

(12) **EUROPEAN PATENT APPLICATION**
published in accordance with Art. 153(4) EPC

(43) Date of publication:
**09.07.2025 Bulletin 2025/28**

(21) Application number: **23860308.8**

(22) Date of filing: **29.08.2023**

(51) International Patent Classification (IPC):
***C08L 71/12*** *(2006.01)* ***C08K 3/013*** *(2018.01)*
***C08K 3/26*** *(2006.01)* ***C08K 5/521*** *(2006.01)*
***C08K 5/524*** *(2006.01)* ***C08L 23/04*** *(2006.01)*

(52) Cooperative Patent Classification (CPC):
**C08K 3/013; C08K 3/26; C08K 5/521; C08K 5/524; C08L 23/04; C08L 71/12;** Y02E 60/10

(86) International application number:
**PCT/JP2023/031095**

(87) International publication number:
**WO 2024/048546 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.09.2022 JP 2022139273**

(71) Applicant: **GLOBAL POLYACETAL CO., LTD.**
**Tokyo 105-0021 (JP)**

(72) Inventor: **TAKANO, Yoichi**
**Hiratsuka-shi, Kanagawa 254-0016 (JP)**

(74) Representative: **Hoffmann Eitle**
**Patent- und Rechtsanwälte PartmbB**
**Arabellastraße 30**
**81925 München (DE)**

(54) **POLYPHENYLENE ETHER RESIN COMPOSITION AND MOLDED ARTICLE**

(57) A polyphenylene ether resin composition according to an aspect of the present invention contains, per 100 parts by mass of a polyphenylene ether-containing resin (A) containing at least more than 80 mass% of a polyphenylene ether resin (a), 5 to 25 parts by mass of an inorganic filler (c), 15 to 27 parts by mass of a phosphorus flame retardant (d), 0.3 to 7 parts by mass of a polyolefin resin (e) having an ethylene-derived skeleton, 3 to 20 parts by mass of a tracking resistance improver (f), and 0.5 to 3 parts by mass of a phosphorus stabilizer (g). A mass ratio of the polyolefin resin (e) to a phosphorus component in the polyphenylene ether resin composition is 0.2 to 2.65. A melt flow rate of the polyolefin resin (e) measured in conformity with JIS K7210 is 0.5 to 100 g/10 min under the measurement conditions of a temperature of 190°C and a load of 2.16 kg.



Processed by Luminess, 75001 PARIS (FR)

## Description

### Field

The present invention relates to a polyphenylene ether resin composition and a molded article.

### Background

Polyphenylene ether resin is a resin excellent in heat resistance, flame retardancy, electrical properties, dimensional stability, and other various properties, and further having excellent properties such as low specific gravity and hydrolysis resistance. The polyphenylene ether resin can be improved in molding processability and impact resistance by blending various resins such as a styrene resin.

Conventionally, such a polyphenylene ether resin composition containing a polyphenylene ether resin or the like has been widely used as a material for various applications such as electric components, electronic device components, and vehicle components. The polyphenylene ether resin composition is required to have various properties depending on the application thereof. For example, when a polyphenylene ether resin composition is used as a material for a protection housing that protects a battery unit including an assembled battery or the like, the polyphenylene ether resin composition is required to have high tracking resistance in addition to flame retardancy and impact resistance necessary for a protection housing of a battery unit.

For example, as a polyphenylene ether resin composition having high tracking resistance, Patent Literature 1 discloses a resin composition containing a polyphenylene ether resin and at least one of a hydrogenated block copolymer having a specific structure and a modified product of the hydrogenated block copolymer.

### Citation List

### Patent Literature

Patent Literature 1: JP 2019-137742 A

### Summary

### Technical Problem

In general, tracking resistance of the polyphenylene ether resin composition can be enhanced by blending a polyolefin resin excellent in electrical properties. However, while being effective in improving tracking resistance as described above, the polyolefin resin is easily combusted, so that the flame retardancy of the polyphenylene ether resin composition may be impaired by excessively blending the polyolefin resin.

The flame retardancy of the polyphenylene ether resin composition can be enhanced by adding a phosphorus flame retardant such as a condensed phosphate ester. However, the excessive addition of the phosphorus flame retardant may lower the impact resistance of the polyphenylene ether resin composition.

Furthermore, high mechanical strength may be required depending on the application of the polyphenylene ether resin composition. For example, the mechanical strength of the polyphenylene ether resin composition can be enhanced by adding an inorganic filler such as a glass fiber. However, the addition of the inorganic filler may significantly lower the tracking resistance of the polyphenylene ether resin composition.

As described above, it has been difficult for the conventional polyphenylene ether resin composition exemplified in Patent Literature 1 described above to simultaneously have high tracking resistance, excellent flame retardancy, and excellent impact resistance, required for applications such as a protection housing of a battery unit.

The present invention has been made in view of the above circumstances, and an object of the present invention is to provide a polyphenylene ether resin composition and a molded article that can simultaneously have high tracking resistance, excellent flame retardancy, and excellent impact resistance.

### Solution to Problem

As a result of intensive studies to solve the problem described above, the present inventor has found that a polyolefin resin having an ethylene-derived skeleton is a component capable of improving a balance between impact resistance and tracking resistance of a polyphenylene ether resin composition, that a polyphenylene ether resin composition capable of achieving simultaneously high tracking resistance, excellent flame retardancy, and excellent impact resistance can be obtained by blending the polyolefin resin, an inorganic filler, a phosphorus flame retardant, a

tracking resistance improver, and a phosphorus stabilizer at a specific ratio with respect to a resin component containing at least a polyphenylene ether resin, and has completed the present invention.

To solve the problem described above and to achieve the object, a polyphenylene ether resin composition according to the present invention includes at least a polyphenylene ether resin (a). The polyphenylene ether resin composition includes, per 100 parts by mass of a polyphenylene ether-containing resin (A) containing more than 80 mass% of the polyphenylene ether resin (a), 5 to 25 parts by mass of an inorganic filler (c), 15 to 27 parts by mass of a phosphorus flame retardant (d), 0.3 to 7 parts by mass of a polyolefin resin (e) having an ethylene-derived skeleton, 3 to 20 parts by mass of a tracking resistance improver (f), and 0.5 to 3 parts by mass of a phosphorus stabilizer (g). A mass ratio of the polyolefin resin (e) to a phosphorus component in the polyphenylene ether resin composition is 0.2 to 2.65, and a melt flow rate of the polyolefin resin (e) measured in conformity with JIS K7210 is 0.5 to 100 g/10 min under measurement conditions of a temperature of 190°C and a load of 2.16 kg.

In the polyphenylene ether resin composition according to the present invention, the polyphenylene ether-containing resin (A) contains 85 to 100 mass% of the polyphenylene ether resin (a) and 0 to 15 mass% of a styrene resin (b).

In the polyphenylene ether resin composition according to the present invention, the tracking resistance improver (f) contains at least one selected from an alkaline earth metal salt, a metal hydroxide, a nitrogen-containing compound, an inorganic acid metal compound, and a layered double hydroxide.

In the polyphenylene ether resin composition according to the present invention, the tracking resistance improver (f) is calcium carbonate.

In the polyphenylene ether resin composition according to the present invention, the inorganic filler (c) contains at least one selected from a glass fiber, mica, and talc.

A molded article according to the present invention includes the polyphenylene ether resin composition according to any one of the above-described inventions.

In the molded article according to the present invention, the molded article is a battery unit housing. Advantageous Effects of Invention

The present invention has an effect that a polyphenylene ether resin composition and a molded article capable of simultaneously having high tracking resistance, excellent flame retardancy and excellent impact resistance can be provided.

## Description of Embodiments

Hereinafter, preferred embodiments of the polyphenylene ether resin composition and the molded article according to the present invention will be described in detail. Note that the present invention is not limited to the following embodiments. The term "to" used in a range in the specification means that a range includes numerical values described before and after this term as a lower limit value and an upper limit value, respectively, unless otherwise specified.

### [Polyphenylene ether resin composition]

The polyphenylene ether resin composition according to an embodiment of the present invention (hereinafter, referred to as a PPE resin composition (Z)) is a resin composition containing at least a polyphenylene ether resin (a).

Specifically, the PPE resin composition (Z) contains, per 100 parts by mass of a polyphenylene ether-containing resin (A) containing more than 80 mass% of the polyphenylene ether resin (a), 5 to 25 parts by mass of an inorganic filler (c), 15 to 27 parts by mass of a phosphorus flame retardant (d), 0.3 to 7 parts by mass of a polyolefin resin (e), 3 to 20 parts by mass of a tracking resistance improver (f), and 0.5 to 3 parts by mass of a phosphorus stabilizer (g). In the PPE resin composition (Z), the polyolefin resin (e) is a polyolefin resin having an ethylene-derived skeleton, such as a polyethylene resin or an ethylene-propylene copolymer. The mass ratio of the polyolefin resin (e) to the phosphorus component in the PPE resin composition (Z) is 0.2 to 2.65.

Hereinafter, each component constituting the PPE resin composition (Z), the mass ratio of the polyolefin resin (e) to the phosphorus component in the PPE resin composition (Z), a molded article including the PPE resin composition (Z), and the like will be described in detail.

### [Polyphenylene ether-containing resin]

First, the polyphenylene ether-containing resin (A) as a component constituting the PPE resin composition (Z) according to the embodiment of the present invention will be described in detail. The polyphenylene ether-containing resin (A) is a resin containing at least more than 80 mass% of the polyphenylene ether resin (a). Examples of the polyphenylene ether-containing resin (A) include: resins containing only the polyphenylene ether resin (a); resins containing the polyphenylene ether resin (a) and a styrene resin (b) (i.e., a modified polyphenylene ether resin); and resins containing

the polyphenylene ether resin (a) and a resin component other than the styrene resin (b).

Specifically, the polyphenylene ether-containing resin (A) contains the polyphenylene ether resin (a) as a main component. The main component as used herein is a component contained in the largest amount in the target component. In the present invention, the content proportion of the polyphenylene ether resin (a) to 100 mass% of the polyphenylene ether-containing resin (A) is more than 80 mass% as described above.

For example, the modified polyphenylene ether resin (hereinafter, referred to as a modified PPE resin) contains the polyphenylene ether resin (a) as a main component, and further contains the styrene resin (b). The modified PPE resin may contain resin components other than the polyphenylene ether resin (a) and the styrene resin (b) as necessary. The polyphenylene ether-containing resin (A) may contain the polyphenylene ether resin (a) as a main component, and further contain a resin component other than the polyphenylene ether resin (a) and the styrene resin (b).

The PPE resin composition (Z) preferably contains 60 to 75 mass% of the polyphenylene ether-containing resin (A) as described above. That is, the content proportion of the polyphenylene ether-containing resin (A) to 100 mass% of the PPE resin composition (Z) is preferably 60 to 75 mass%, more preferably 62 to 73 mass%. The polyphenylene ether-containing resin (A) preferably contains 81 to 100 mass% of the polyphenylene ether resin (a) and 0 to 19 mass% of the styrene resin (b), more preferably contains 83 to 100 mass% of the polyphenylene ether resin (a) and 0 to 17 mass% of the styrene resin (b), still more preferably contains 85 to 100 mass% of the polyphenylene ether resin (a) and 0 to 15 mass% of the styrene resin (b). By setting the content proportion of each of the polyphenylene ether resin (a) and the styrene resin (b) to 100 mass% of the polyphenylene ether-containing resin (A) to be within the above range, the heat resistance, flame retardancy, and mechanical strength of the PPE resin composition (Z) tend to be further improved.

[Polyphenylene ether resin (a)]

Next, the polyphenylene ether resin (a) according to the embodiment of the present invention will be described in detail. The polyphenylene ether resin (a) is a resin component used in the PPE resin composition (Z) according to the embodiment of the present invention, and is contained in the PPE resin composition (Z) as a main component of the polyphenylene ether-containing resin (A). For example, the polyphenylene ether resin (a) is a polymer having a structural unit represented by the following General Formula (1) in the main chain. The polyphenylene ether resin (a) may be a homopolymer or a copolymer.

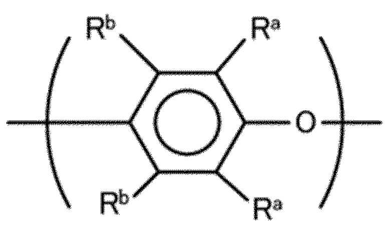

(1)

In General Formula (1), two $R^a$ each independently represent a hydrogen atom, a halogen atom, a primary alkyl group, a secondary alkyl group, an aryl group, an aminoalkyl group, a haloalkyl group, a hydrocarbon oxy group, or a halohydrocarbon oxy group. Provided, however, that both of these two $R^a$ are not hydrogen atoms at the same time. Two $R^b$ each independently represent a hydrogen atom, a halogen atom, a primary alkyl group, a secondary alkyl group, an aryl group, a haloalkyl group, a hydrocarbon oxy group, or a halohydrocarbon oxy group.

$R^a$ and $R^b$ are each preferably a hydrogen atom, a primary alkyl group, a secondary alkyl group, or an aryl group. Suitable examples of the primary alkyl group include a methyl group, an ethyl group, a n-propyl group, a n-butyl group, a n-amyl group, an isoamyl group, a 2-methylbutyl group, a 2,3-dimethylbutyl group, a 2-methylpentyl group, a 3-methylpentyl group, a 4-methylpentyl group, and a heptyl group. Suitable examples of the secondary alkyl group include an isopropyl group, a sec-butyl group, and a 1-ethylpropyl group. Among them, $R^a$ is particularly preferably a primary alkyl group having 1 to 4 carbon atoms, a secondary alkyl group having 1 to 4 carbon atoms, or a phenyl group. $R^b$ is particularly preferably a hydrogen atom.

Examples of the suitable homopolymer of the polyphenylene ether resin (a) include polymers of 2,6-dialkylphenylene ether. Examples of the polymer of 2,6-dialkylphenylene ether include poly(2,6-dimethyl-1,4-phenylene ether), poly(2,6-diethyl-1,4-phenylene ether), poly(2,6-dipropyl-1,4-phenylene ether), poly(2-ethyl-6-methyl-1,4-phenylene ether), and poly(2-methyl-6-propyl-1,4-phenylene ether).

Examples of the suitable copolymer of the polyphenylene ether resin (a) include 2,6-dialkylphenol/2,3,6-trialkylphenol copolymers, graft copolymers obtained by graft-polymerizing poly(2,6-dimethyl-1,4-phenylene ether) with styrene, and graft copolymers obtained by graft-polymerizing a 2,6-dimethylphenol/2,3,6-trimethylphenol copolymer with styrene. Examples of the 2,6-dialkylphenol/2,3,6-trialkylphenol copolymer include 2,6-dimethylphenol/2,3,6-trimethylphenol copolymers, 2,6-dimethylphenol/2,3,6-triethylphenol copolymers, 2,6-diethylphenol/2,3,6-trimethylphenol copolymers, and 2,6-dipropylphenol/2,3,6-trimethylphenol copolymers.

Among them, poly(2,6-dimethyl-1,4-phenylene ether) and a 2,6-dimethylphenol/2,3,6-trimethylphenol random copolymer are particularly preferable as the polyphenylene ether resin (a). As the polyphenylene ether resin (a), for example, a polyphenylene ether resin in which the number of terminal groups and the copper content percentage are defined as described in JP 2005-344065 A can also be suitably used.

Regarding the molecular weight of the polyphenylene ether resin (a), in a viscosity average molecular weight obtained by converting an intrinsic viscosity measured at a temperature of 30°C using chloroform as a solvent, the above intrinsic viscosity is preferably 0.2 dl/g or more, more preferably 0.3 dl/g or more. Setting the viscosity average molecular weight of the polyphenylene ether resin (a) to that at the above intrinsic viscosity of 0.2 dl/g or more tends to improve the mechanical strength of the PPE resin composition (Z). The above intrinsic viscosity is preferably 0.8 dl/g or less, more preferably 0.6 dl/g or less. Setting the viscosity average molecular weight of the polyphenylene ether resin (a) to that at the above intrinsic viscosity of 0.8 dl/g or less improves the fluidity of the PPE resin composition (Z), and as a result, molding processing of the PPE resin composition (Z) tends to be facilitated. The polyphenylene ether resin (a) may have a viscosity average molecular weight at the above intrinsic viscosity within a range of 0.2 to 0.8 dl/g by using two or more polyphenylene ether resins having different intrinsic viscosities in combination.

The method for producing the polyphenylene ether resin (a) is not particularly limited, and a publicly known method can be adopted. For example, the polyphenylene ether resin (a) can be produced by a method such as oxidative polymerization of a monomer such as 2,6-dimethylphenol in the presence of an amine copper catalyst. In this case, the intrinsic viscosity can be controlled within a desired range by selecting reaction conditions. For example, the intrinsic viscosity can be controlled by selecting conditions such as a polymerization temperature, a polymerization time, and a catalyst amount.

As the polyphenylene ether resin (a) described above, one polyphenylene ether resin may be used alone, or two or more polyphenylene ether resins may be mixed and used.

Containing the polyphenylene ether resin (a) as described above in the PPE resin composition (Z) can enhance the heat resistance of the PPE resin composition (Z). In the embodiment of the present invention, the heat resistance of the PPE resin composition (Z) is represented by, for example, deflection temperature under load measured in conformity with JIS K7191-2 or ISO-75-2. The deflection temperature under load of the PPE resin composition (Z) can be increased to a predetermined value or more by containing the above-described polyphenylene ether resin (a). For example, the deflection temperature under load of the PPE resin composition (Z) is preferably 100°C or higher under measurement conditions of an applied load of 1.80 MPa.

[Styrene resin (b)]

Next, the styrene resin (b) according to the embodiment of the present invention will be described in detail. The styrene resin (b) is a resin component used in the PPE resin composition (Z) according to the embodiment of the present invention, and is contained in the PPE resin composition (Z) as a component of the polyphenylene ether-containing resin (A). In this case, the polyphenylene ether-containing resin (A) is a modified PPE resin. Examples of the styrene resin (b) include polymers of a styrene monomer, copolymers of a styrene monomer and another copolymerizable monomer, and styrene graft copolymers.

More specific examples of the styrene resin (b) include resins such as polystyrenes (PS), high impact polystyrenes (HIPS), acrylonitrile/styrene copolymers (AS resin), acrylonitrile/butadiene/styrene copolymers (ABS resin), methyl methacrylate/acrylonitrile/butadiene/styrene copolymers (MABS resin), acrylonitrile/acrylic rubber/styrene copolymers (AAS resin), acrylonitrile/ethylenepropylene rubber/styrene copolymers (AES resin), and styrene/IPN rubber copolymers, or mixtures thereof. The styrene resin (b) may be stereoregular styrene resin, such as syndiotactic polystyrene. Among them, polystyrene and high impact polystyrene are preferable as the styrene resin (b), and high impact polystyrene is particularly preferable from the viewpoint of improving the impact resistance of the PPE resin composition (Z).

The high impact polystyrene used as the styrene resin (b) in the embodiment of the present invention is obtained by, for example, polymerizing at least a styrene monomer in the presence of rubber. In the high impact polystyrene, fine rubbery particles are blended or graft-polymerized in a matrix of a styrene polymer. Examples of the above rubber include polybutadienes, styrene-butadiene copolymers, polyisoprenes, and ethylene-propylene copolymers. Examples of the above styrene polymer include polystyrenes and copolymers of styrene and another copolymerizable monomer. Among them, polystyrene is preferable.

Examples of the styrene polymer include polymers consist of a repeating unit represented by the following General Formula (2) and copolymers with another copolymerizable monomer, containing 50 mass% or more of the repeating unit represented by the following General Formula (2) .

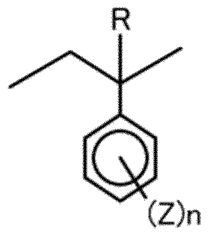

(2)

In General Formula (2), R is a hydrogen atom or an alkyl group having 1 to 4 carbon atoms. Z represents a hydrogen atom, an alkyl group having 1 to 4 carbon atoms, or a halogen atom. n is an integer of 1 to 5.

Examples of the monomer other than styrenes that is copolymerizable with the styrene monomer include vinyl monomers such as acrylonitrile and methyl methacrylate.

The content percentage of the rubbery polymer component in the high impact polystyrene is preferably 1 mass% or more, more preferably 4 mass% or more, still more preferably 8 mass% or more. The content percentage of the rubbery polymer component is preferably 30 mass% or less, more preferably 25 mass% or less, still more preferably 20 mass% or less. When the high impact polystyrene contains a monomer component other than the styrene monomer, the sum of the content percentages of the rubbery polymer component and the styrene monomer component in the high impact polystyrene is preferably 85 mass% or more, more preferably 90 mass% or more.

The rubbery polymer component in the high impact polystyrene is distributed in a particle shape over the entire polystyrene matrix, and mainly has a multi-cellular structure. The volume average particle size of the rubbery polymer component in a particle shape (hereinafter, referred to as rubber particles) is preferably 0.1 to 2.0 μm, more preferably 0.2 to 1.5 μm, still more preferably 0.3 to 1.0 μm. By blending high impact polystyrene containing rubber particles having such a volume average particle size, the impact resistance, surface glossiness, and colorability of the PPE resin composition (Z) tend to be improved.

The volume average particle size of the rubber particles in the high impact polystyrene can be determined by observing a sample prepared by dyeing an ultrathin section of the target high impact polystyrene with an aqueous osmium tetroxide solution using a photograph taken with a transmission electron microscope, and using the following equation. For example, the volume average particle size of the rubber particles can be calculated by using the following equation for about 500 to about 700 rubber particles in a photograph taken with a transmission electron microscope.

$$\text{Volume average particle size} = \Sigma(ni \cdot Di^4)/\Sigma(ni \cdot Di^3)$$

In this formula, ni represents the number of rubber particles having a particle size Di. The measurement interval of the particle size Di is 0.1 μm. When the shape of the rubber particles in the photograph cannot be regarded as a circle, the particle size Di is measured by regarding such a shape as a circle equivalent.

As a process for producing high impact polystyrene having a volume average particle size of 0.1 to 2.0 μm, for example, a publicly known method described in JP H03-28210 A can be used. Examples of commercially available products of the high impact polystyrene having the above volume average particle size include HT478 manufactured by PS Japan Corporation, and XL1 and XL4 manufactured by Toyo Styrene Co., Ltd.

The melt flow rate (MFR) reflecting the molecular weight of the styrene resin (b) preferably has a measurement value falling within the range of 0.5 to 15 g/10 min under the conditions of a temperature of 200°C and a load of 5 kg, more preferably has a measurement value falling within the range of 1.0 to 10 g/10 min. The weight average molecular weight (Mw) of the styrene resin (b) is, for example, preferably 50,000 or more, more preferably 100,000 or more, still more preferably 150,000 or more. The upper limit of Mw of the styrene resin (b) is, for example, preferably 500,000 or less, more preferably 400,000 or less, still more preferably 300,000 or less. Mw of the styrene resin (b) can be measured by, for example, a measurement method such as size exclusion chromatography.

Note that the method for producing the styrene resin (b) is not particularly limited, and a publicly known method can be adopted. For example, the styrene resin (b) can be produced by a method such as an emulsion polymerization method, a solution polymerization method, a suspension polymerization method, or a bulk polymerization method. As the styrene resin (b), one styrene resin may be used alone, or two or more styrene resins may be mixed and used.

The styrene resin (b) as described above is contained in the polyphenylene ether-containing resin (A) at a content proportion smaller than that of the polyphenylene ether resin (a) as a main component. The content proportion of the styrene resin (b) is set in consideration of the balance with the content proportion of the polyphenylene ether resin (a) in order to improve properties of the PPE resin composition (Z), such as flame retardancy.

From the perspective of improving the heat resistance, flame retardancy, and mechanical strength of the PPE resin composition (Z), the content proportion of each of the polyphenylene ether resin (a) and the styrene resin (b) to 100

mass% of the polyphenylene ether-containing resin (A) is preferably set within the above range.

In the embodiment of the present invention, the impact resistance of the PPE resin composition (Z) is represented by, for example, Charpy notched impact strength measured in conformity with ISO-179-1 and ISO-179-2. The Charpy notched impact strength of the PPE resin composition (Z) is preferably 9.0 kJ/$m^2$ or more under the temperature condition of 23°C, for example.

The flame retardancy of the PPE resin composition (Z) is represented by, for example, flammability ratings (grades such as V-0, V-1, and V-2) determined on the basis of a flammability test conforming to the UL94 standard (hereinafter, referred to as the UL94V test). In the present invention, the flame retardancy of the PPE resin composition (Z) preferably satisfies the criteria for V-0 as a flammability rating based on the UL94V test.

[Other resin components]

Next, among the resin components contained in the polyphenylene ether-containing resin (A), resin components other than the above-described polyphenylene ether resin (a) and styrene resin (b) will be described in detail. The polyphenylene ether-containing resin (A) may contain resin components other than the above-described polyphenylene ether resin (a) and styrene resin (b) as long as the effects of improving the properties such as tracking resistance, flame retardancy, and impact resistance of the PPE resin composition (Z) according to the embodiment of the present invention are not impaired.

Specifically, examples of the other resin components described above include thermoplastic resins and thermosetting resins. Examples of the thermoplastic resin include polyamide resins, polyester resins, polyphenylene sulfide resins, liquid crystal polyester resins, polycarbonate resins, polyacetal resins, polyacrylonitrile resins, acrylic resins, and olefin resins such as polyethylene resins and polypropylene copolymer resins. Examples of the thermosetting resin include epoxy resins, melamine resins, and silicone resins.

The polyphenylene ether-containing resin (A) may contain, as the other resin component, two or more thermoplastic resins, two or more thermosetting resins, or a combination of two or more of these thermoplastic resins and thermosetting resins. To 100 mass% of the polyphenylene ether-containing resin (A), the content proportion of the other resin components described above is preferably 5 mass% or less, more preferably 2 mass% or less, still more preferably 1 mass% or less, and particularly preferably 0.5 mass% or less.

[Inorganic filler (c)]

Next, the inorganic filler (c) according to the embodiment of the present invention will be described in detail. The inorganic filler (c) is a component constituting the PPE resin composition (Z) according to the embodiment of the present invention, and is contained in the PPE resin composition (Z) mainly for the purpose of improving the mechanical strength of the PPE resin composition (Z).

Examples of the inorganic filler (c) as described above include glass fibers, glass flakes, glass beads, milled fibers, alumina fibers, carbon fibers, aramid fibers, titanium oxide, boron nitride, potassium titanate whiskers, silica, mica, talc, and wollastonite. Among them, the inorganic filler (c) preferably contains at least one selected from glass fibers, mica, and talc, and is particularly preferably glass fibers, because the effect of improving the mechanical strength of the PPE resin composition (Z) per added amount is high.

The shape and the like of the inorganic filler (c) are not particularly limited. As the inorganic filler (c), one inorganic filler may be used alone, or two or more inorganic fillers may be blended and used.

The glass fiber suitably used as the inorganic filler (c) has an average diameter of 20 μm or less. From the viewpoint of further improving the balance between physical properties (heat resistant stiffness and impact strength) of the PPE resin composition (Z) and the viewpoint of further reducing the warpage after molding of the PPE resin composition (Z), the glass fiber particularly preferably has an average diameter of 1 to 15 μm.

The length of the glass fiber as the inorganic filler (c) is not specified, and the glass fiber can be selected and used from those of a long fiber type (rovings), those of a short fiber type (chopped strands), and the like. The number of glass fibers bundled in this case is preferably about 100 to 5000. As long as the average length of the glass fibers contained in the kneaded PPE resin composition (Z) is 0.1 mm or more, the inorganic filler (c) may be ground strands called milled fiber or glass powder, or may be a continuous monofilament sliver. The composition of the raw material glass for the glass fibers as the inorganic filler (c) may be free of alkalis. Examples of the glass fiber include E glass, C glass, and S glass. Among them, E glass is preferable as the inorganic filler (c).

As the inorganic filler (c), an inorganic filler surface-treated with a surface treatment agent such as a coupling agent is more preferably used in order to improve adhesion with a resin. When the surface-treated inorganic filler (c) is used, the inorganic filler (c) tends to be excellent in durability, humidity/heat resistance, hydrolysis resistance, and heat shock resistance. As the surface treatment agent, any conventionally and publicly known surface treatment agent can be used. Specific examples thereof include various coupling agents such as aminosilane, epoxysilane, allylsilane, vinylsilane, and titanate coupling agents. Among them, aminosilane, epoxysilane, and vinylsilane surface treatment agents are preferable. Specific examples thereof include γ-aminopropyltriethoxysilane, γ-aminopropyltrimethoxysilane and γ-(2-aminoethyl) aminopropyltrimethoxysilane, γ-glycidoxypropyltrimethoxysilane, vinyltrichlorosilane, vinyltriethoxysilane, and γ-methacryloxypropyltrimethoxysilane. These silane compounds may be used alone, or two or more of these compounds may be combined and used. As the inorganic filler (c), in addition to the above-described surface treatment agents, if necessary, an inorganic filler surface-treated with: a lubricant such as a fatty acid amide compound or silicone oil; an antistatic agent such as a quaternary ammonium salt; a resin having film-forming ability such as an epoxy resin or a urethane resin; or a mixture of a resin having film-forming ability, a heat stabilizer, a flame retardant, or the like can also be used.

In the PPE resin composition (Z) according to the embodiment of the present invention, when two or more inorganic fillers (c) are blended and used, the content proportion of glass fibers to 100 mass% of the blended inorganic filler (c) is preferably 25 mass% or more, more preferably 40 mass% or more, still more preferably 50 mass% or more, and particularly preferably 60 mass% or more. By using glass fibers within this range as a component of the inorganic filler (c), the mechanical strength of the PPE resin composition (Z) can be effectively improved.

In the PPE resin composition (Z) according to the embodiment of the present invention, the content of the inorganic filler (c) per 100 parts by mass of the polyphenylene ether-containing resin (A) is 5 parts by mass or more, preferably 8 parts by mass or more, more preferably 10 parts by mass or more, still more preferably 12 parts by mass or more. By setting the lower limit value of the content of the inorganic filler (c) contained in the PPE resin composition (Z) to 5 parts by mass or more as described above, the mechanical strength of the PPE resin composition (Z) can be improved. Furthermore, dimensional accuracy can be improved and a difference in thermal expansion coefficient from other materials (metal materials and the like) can be reduced. The content of the inorganic filler (c) per 100 parts by mass of the polyphenylene ether-containing resin (A) is 25 parts by mass or less, preferably 23 parts by mass or less, more preferably 20 parts by mass or less, still more preferably 18 parts by mass or less. By setting the upper limit value of the content of the inorganic filler (c) contained in the PPE resin composition (Z) to 25 parts by mass or less as described above, the tracking resistance of the PPE resin composition (Z) tends to be further improved.

In the embodiment of the present invention, the mechanical strength of the PPE resin composition (Z) is represented by, for example, tensile strength, flexural strength, and flexural modulus. The tensile strength of the PPE resin composition (Z) is measured in conformity with ISO-527. The flexural strength and flexural modulus of the PPE resin composition (Z) are measured in conformity with ISO-178.

When the content of the above-described inorganic filler (c) is less than 5 parts by mass, the effect of improving the mechanical strength by the inorganic filler (c) cannot be obtained. When the content of the above-described inorganic filler (c) exceeds 25 parts by mass, the tracking resistance of the PPE resin composition (Z) is significantly deteriorated.

[Phosphorus flame retardant (d)]

Next, the phosphorus flame retardant (d) applied to the PPE resin composition (Z) according to the embodiment of the present invention will be described in detail. The PPE resin composition (Z) further contains the phosphorus flame retardant (d) in addition to the above-described polyphenylene ether-containing resin (A) and inorganic filler (c). The phosphorus flame retardant (d) is used for imparting, to the PPE resin composition (Z), flame retardancy required in accordance with the application of the PPE resin composition (Z). Due to containing the phosphorus flame retardant (d), the PPE resin composition (Z) has more excellent flame retardancy.

The phosphorus flame retardant (d) is preferable as a flame retardant to be applied to the PPE resin composition (Z) due to a high compatibility with the above-described polyphenylene ether resin (a). Examples of the phosphorus flame retardant (d) include metal ethylphosphinate salts, metal diethylphosphinate salts, phosphates, condensed phosphates, and phosphazene compounds. Among them, phosphates, condensed phosphates, and phosphazene compounds are preferable, and phosphates and condensed phosphates are more preferable. As the phosphorus flame retardant (d), one phosphorus flame retardant may be used alone. However, preferably, two or more phosphorus flame retardants having different compositions are used in combination. In particular, more preferably, two or more selected from phosphates and condensed phosphates are used in combination.

For example, the phosphorus flame retardant (d) is particularly preferably a phosphate flame retardant represented by the following General Formula (3).

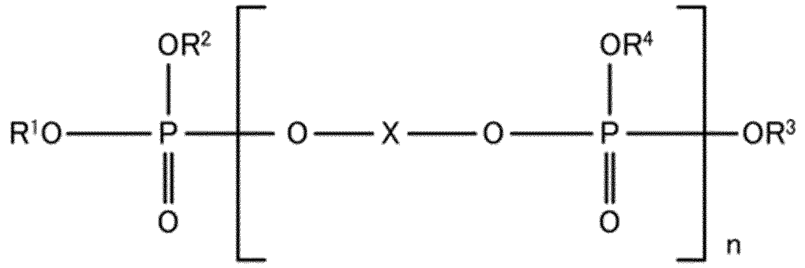

(3)

In General Formula (3), $R^1$, $R^2$, $R^3$, and $R^4$ each independently represent an aryl group. These aryl groups may be substituted or unsubstituted. X represents a divalent aromatic group. The divalent aromatic group may or may not have a substituent. n represents an integer of 0 to 5.

Examples of the aryl group represented by each of $R^1$, $R^2$, $R^3$, and $R^4$ include a phenyl group and a naphthyl group. Examples of the divalent aromatic group represented by X include a phenylene group, a naphthylene group, and a group derived from bisphenol. Examples of the substituent in each of $R^1$, $R^2$, $R^3$, $R^4$, and X include an alkyl group, an alkoxy group, and a hydroxy group. When the integer n is 0, the phosphate flame retardant represented by General Formula (3) is a phosphate. When the integer n is any of 1 to 5, the phosphate flame retardant represented by General Formula (3) is a condensed phosphate. The condensed phosphate may be a mixture.

Examples of such a phosphate flame retardant include triphenyl phosphate, bisphenol A bisphosphate, hydroquinone bisphosphate, resorcinol bisphosphate, and substitutes or condensates thereof. Suitable examples of commercially available products of the phosphate flame retardant include: "TPP" (triphenyl phosphate), "CR733S" (resorcinol bis(diphenylphosphate)), "CR741" (bisphenol A bis(diphenyl phosphate)), "PX-200" (resorcinol bis(dixylenyl phosphate)), all of which are manufactured by DAIHACHI CHEMICAL INDUSTRY CO., LTD.; and "FP-900L" (biphenyl-4,4'-diol bis(diphenyl phosphate)) manufactured by ADEKA CORPORATION. These products are easily available.

The lower limit value of the content of the phosphorus flame retardant (d) contained in the PPE resin composition (Z) is 15 parts by mass or more, preferably 16 parts by mass or more, per 100 parts by mass of the polyphenylene ether-containing resin (A). By setting the lower limit value of the content of the phosphorus flame retardant (d) contained in the PPE resin composition (Z) to 15 parts by mass or more as described above, the flame retardancy of the PPE resin composition (Z) tends to be further improved. The upper limit value of the content of the phosphorus flame retardant (d) per 100 parts by mass of the polyphenylene ether-containing resin (A) is 27 parts by mass or less, preferably 26 parts by mass or less, more preferably 25 parts by mass or less. By setting the upper limit value of the content of the phosphorus flame retardant (d) contained in the PPE resin composition (Z) to 27 parts by mass or less as described above, the heat resistance or the impact resistance of the PPE resin composition (Z) tends to be unimpaired.

Specifically, when the PPE resin composition (Z) contains the later-described polyolefin resin (e) for the purpose of improving tracking resistance, the flame retardancy of the PPE resin composition (Z) may decrease due to the ease of combustion of the polyolefin resin (e). On the other hand, when the phosphorus flame retardant (d) is contained in the PPE resin composition (Z) in the above-described content, the decrease in flame retardancy caused by the polyolefin resin (e) can be reduced, and the flame retardancy of the PPE resin composition (Z) can be improved.

As described above, the flame retardancy of the PPE resin composition (Z) is represented by the flammability ratings determined based on the UL94V test. The flame retardancy of the PPE resin composition (Z) can be improved to such an extent that the criteria for V-0 as a flammability rating are satisfied by containing the above-described phosphorus flame retardant (d).

Less than 15 parts by mass of the content of the above-described phosphorus flame retardant (d) makes it difficult to impart flame retardancy to the PPE resin composition (Z) even by containing the phosphorus flame retardant (d) in the PPE resin composition (Z). When the content of the above-described phosphorus flame retardant (d) exceeds 27 parts by mass, the impact resistance and heat resistance of the PPE resin composition (Z) may be deteriorated.

When the content of the above inorganic filler (c) per 100 parts by mass of the polyphenylene ether-containing resin (A) is 12 parts by mass or more, the content of the above phosphorus flame retardant (d) is preferably 18 to 27 parts by mass in order to impart flame retardancy to the PPE resin composition (Z).

[Polyolefin resin (e)]

Next, the polyolefin resin (e) as a component constituting the PPE resin composition (Z) according to the embodiment of the present invention will be described in detail. The polyolefin resin (e) is a polyolefin resin having an ethylene-derived skeleton, and is contained in the PPE resin composition (Z) for the purpose of improving tracking resistance and impact resistance of the PPE resin composition (Z).

In the embodiment of the present invention, the "polyolefin resin having an ethylene-derived skeleton" means a

polyolefin resin produced by a polymerization reaction of one or more monomers at least containing ethylene. That is, the polyolefin resin (e) is a homopolymer or copolymer containing at least ethylene as a monomer unit. For example, when the polyolefin resin (e) is a homopolymer, examples of the homopolymer include polyethylene. When the polyolefin resin (e) is a copolymer, examples of the copolymer include copolymers of ethylene and a monomer other than ethylene, specifically, an ethylene-propylene copolymer, an ethylene-butene copolymer, and an ethylene-propylene-butene copolymer.

Here, in a resin composition containing a polyolefin resin having an ethylene-derived skeleton, in general, a nucleating agent such as a metal salt of an aromatic carboxylic acid or talc may be blended for the purpose of improving the crystallinity of the polyolefin resin. However, when a nucleating agent is blended into the polyolefin resin, tracking resistance of the resin composition containing the polyolefin resin may be deteriorated. Therefore, the polyolefin resin (e) according to the embodiment of the present invention is preferably a nucleating agent-free polyolefin resin.

The melt flow rate (hereinafter, sometimes referred to as the MFR) of the polyolefin resin (e) is measured in conformity with JIS K7210. For example, under the measurement conditions of a temperature of 190°C and a load of 2.16 kg, the lower limit value of the MFR is preferably 0.5 g/10 min or more, more preferably 0.8 g/10 min or more, still more preferably 1.0 g/10 min or more, and particularly preferably 1.2 g/10 min or more. When the MFR of the polyolefin resin (e) under the above measurement conditions is less than 0.5 g/10 min, the processability (moldability) and flame retardancy of the PPE resin composition (Z) containing the polyolefin resin (e) may be deteriorated. The decrease in flame retardancy in this case is considered to be caused by, for example, a decrease in dispersibility of the polyolefin resin (e) having the above MFR of less than 0.5 g/10 min in the PPE resin composition (Z). From the viewpoint of reducing a decrease in the mechanical strength of the PPE resin composition (Z), the upper limit value of the MFR of the polyolefin resin (e) under the above measurement conditions is preferably 100 g/10 min or less, more preferably 40 g/10 min or less, still more preferably 20 g/10 min or less, and particularly preferably 10 g/10 min or less. When the MFR exceeds 100 g/10 min, the mechanical strength and flame retardancy of the PPE resin composition (Z) containing the polyolefin resin (e) may be deteriorated. The decrease in flame retardancy in this case is considered to be caused by, for example, a change in the dispersion state of the polyolefin resin (e) in the PPE resin composition (Z). This is because the difference in viscosity between the polyolefin resin (e) having the above MFR of more than 100 g/10 min and the component contained in the PPE resin composition (Z) is large.

Note that in the present embodiment, as the polyolefin resin (e), one polyolefin resin may be used alone, or two or more polyolefin resins may be blended and used.

In the PPE resin composition (Z) according to the embodiment of the present invention, the content of the polyolefin resin (e) per 100 parts by mass of the polyphenylene ether-containing resin (A) is 0.3 parts by mass or more, preferably 0.5 parts by mass or more, more preferably 1 part by mass or more, still more preferably 3 parts by mass or more. The content of the polyolefin resin (e) per 100 parts by mass of the polyphenylene ether-containing resin (A) is 7 parts by mass or less, preferably 6 parts by mass or less, more preferably 5.5 parts by mass or less, still more preferably 5 parts by mass or less. By containing the polyolefin resin (e) whose content falls within this range in the PPE resin composition (Z), tracking resistance can be improved without impairing the flame retardancy of the PPE resin composition (Z).

The tracking resistance of the PPE resin composition (Z) is represented by a comparative tracking index (hereinafter, referred to as the CTI value) that is an index indicating how tracking unlikely occurs on and/or in an insulator. The CTI value of the PPE resin composition (Z) is measured in conformity with IEC 60112, and can be increased to a predetermined value or more by containing the above-described polyolefin resin (e). For example, the CTI value of the PPE resin composition (Z) is preferably 250 V or more.

When the content of the above-described polyolefin resin (e) is less than 0.3 parts by mass, the effect of improving tracking resistance and impact resistance by the polyolefin resin (e) cannot be obtained. That is, the CTI value and impact resistance of the PPE resin composition (Z) are not improved to their respective target values. When the content of the above-described polyolefin resin (e) exceeds 7 parts by mass, the mechanical strength of the PPE resin composition (Z) decreases. Since the polyolefin resin (e) is a resin which is easily combusted, the flame retardancy of the PPE resin composition (Z) is also impaired.

On the other hand, in the PPE resin composition (Z), by dispersing the polyolefin resin (e) in the polyphenylene ether-containing resin (A), the impact resistance of the PPE resin composition (Z) can be improved. The effect of improving the impact resistance is considered due to the high impact resistance of the polyolefin resin (e) itself as well as a characteristic of the polyolefin resin (e) of easily shifting to a dispersion state suitable for absorbing impact in the PPE resin composition (Z).

[Tracking resistance improver (f)]

Next, the tracking resistance improver (f) applied to the PPE resin composition (Z) according to the embodiment of the present invention will be described in detail. The PPE resin composition (Z) further contains the tracking resistance improver (f) in addition to the above-described polyphenylene ether-containing resin (A), inorganic filler (c), phosphorus flame retardant (d), and polyolefin resin (e). The tracking resistance improver (f) is a component blended into the PPE resin

composition (Z) for the purpose of improving the tracking resistance of the PPE resin composition (Z).

Examples of the tracking resistance improver (f) as described above include alkaline earth metal salts, metal hydroxides, nitrogen-containing compounds, inorganic acid metal compounds, salts of aminotriazine compounds, organic acid salts or inorganic acid salts of the aminotriazine compounds, layered double hydroxides, a metal sulfates, and metal sulfides. Among them, the tracking resistance improver (f) preferably contains at least one selected from alkaline earth metal salts, metal hydroxides, nitrogen-containing compounds, inorganic acid metal compounds, and layered double hydroxides.

Examples of the above alkaline earth metal salt include carbonates such as calcium carbonate and (hydrogen) phosphates such as calcium hydrogen phosphate. Examples of the above metal hydroxide include aluminum hydroxide, magnesium hydroxide, zirconium hydroxide, and alumina hydrate (boehmite). Examples of the above inorganic acid metal compound include (hydrated) metal borates and (hydrated) metal stannates. Examples of the (hydrated) metal borate include (hydrated) zinc borate, (hydrated) calcium borate, and (hydrated) aluminum borate. Examples of the (hydrated) metal stannate include (hydrated) zinc stannate.

Examples of the above nitrogen-containing compound include aminotriazine compounds exemplified in melamine condensates such as melamine, guanamine, melam, and melem. Examples of the organic acid salts or the inorganic acid salts of the above aminotriazine compounds include cyanurates such as melamine cyanurate, and phosphates such as melamine polyphosphate. Examples of the above layered double hydroxide include hydrotalcite. Examples of the above metal sulfate include calcium sulfate, magnesium sulfate, and barium sulfate. Examples of the above metal sulfide include zinc sulfide, molybdenum sulfide, and tungsten sulfide.

A more preferable candidate for the tracking resistance improver (f) is an alkaline earth metal salt. Among the alkaline earth metal salts, the tracking resistance improver (f) is particularly preferably calcium carbonate.

When the tracking resistance improver (f) is in the state of a raw material (state before being contained in the PPE resin composition (Z)), the average particle size of primary particles of the tracking resistance improver (f) is preferably 0.1 to 15 μm, more preferably 0.15 to 5 μm. The average particle size of the primary particles of the tracking resistance improver (f) can be determined by arithmetically averaging the average particle size of the primary particle sizes of the particles in a photograph taken by observation using a scanning electron microscope (SEM). When the primary particles of the tracking resistance improver (f) are particles having an average particle size of 0.1 μm or more, aggregation can be prevented, and favorable dispersion is obtained during melt-kneading. When the primary particles are particles having an average particle size of 15 μm or less, the tracking resistance tends to be improved without reducing the impact resistance of the PPE resin composition (Z).

As the above-described tracking resistance improver (f), one tracking resistance improver may be used alone, or two or more tracking resistance improvers may be combined and used.

In addition, the tracking resistance improver (f) may be surface-treated. The surface treatment applied to the tracking resistance improver (f) is not particularly limited, but is, for example, a surface treatment with a fatty acid, a resin acid, a silicic acid, a phosphoric acid, a silane coupling agent, an alkylarylsulfonic acid, or a salt thereof. Examples of the fatty acid include saturated or unsaturated fatty acids having 6 to 31 carbon atoms, preferably saturated or unsaturated fatty acids having 12 to 28 carbon atoms. Among these surface treatments, the tracking resistance improver (f) surface-treated with a fatty acid is preferable from the viewpoint of dispersibility and handleability at the time of production. When calcium carbonate surface-treated with a fatty acid is used as the tracking resistance improver (f), the tracking resistance improver (f) is more uniformly dispersed in the polyphenylene ether-containing resin (A). This makes the tracking resistance of the PPE resin composition (Z) more excellent.

The lower limit value of the content of the tracking resistance improver (f) contained in the PPE resin composition (Z) is 3 parts by mass or more per 100 parts by mass of the polyphenylene ether-containing resin (A). The upper limit value of the content of the tracking resistance improver (f) is 20 parts by mass or less per 100 parts by mass of the polyphenylene ether-containing resin (A). By containing the tracking resistance improver (f) whose content falls within this range in the PPE resin composition (Z), tracking resistance of the PPE resin composition (Z) can be improved.

The tracking resistance improver (f) inhibits the generation of a carbonized component and promotes the volatilization of the carbonized component by a heat absorption and diluting action due to dehydration or decomposition of the tracking resistance improver (f) itself. As a result, the tracking resistance improver (f) can also improve the tracking resistance of the PPE resin composition (Z) by itself. The tracking resistance improver (f) can support impartation of the flame retardancy to the PPE resin composition (Z) by the phosphorus flame retardant (d). This tends to improve the flame retardancy of the PPE resin composition (Z) in cooperation with the phosphorus flame retardant (d).

When the content of the above tracking resistance improver (f) is less than 3 parts by mass, the tracking resistance improver (f) contained in the PPE resin composition (Z) may not be able to improve the tracking resistance of the PPE resin composition (Z). When the content of the above tracking resistance improver (f) exceeds 20 parts by mass, mechanical properties such as rigidity and impact resistance as well as the heat resistance and the fluidity of the PPE resin composition (Z) may be deteriorated.

[Phosphorus stabilizer (g)]

Next, the phosphorus stabilizer (g) applied to the PPE resin composition (Z) according to the embodiment of the present invention will be described in detail. The PPE resin composition (Z) further contains the phosphorus stabilizer (g) in addition to the above-described polyphenylene ether-containing resin (A), inorganic filler (c), phosphorus flame retardant (d), polyolefin resin (e), and tracking resistance improver (f). The phosphorus stabilizer (g) is a component contained in the PPE resin composition (Z) for the purpose of improving heat stability during use or melt-kneading in the production and molding steps of the PPE resin composition (Z) and imparting flame retardancy to the PPE resin composition (Z).
Examples of the phosphorus stabilizer (g) include phosphite compounds and phosphonite compounds. One of these compounds may be used alone as the phosphorus stabilizer (g), or two or more thereof may be mixed and used. The phosphorus stabilizer (g) preferably contains at least one of phosphite compounds and phosphonite compounds.
Examples of the phosphite compound include phosphite. Specific examples of the phosphite compound include tris(2,4-di-t-butylphenyl) phosphite, bis(2,4-di-t-butylphenyl)pentaerythritol-di-phosphite, bis(2,6-di-t-butyl-4-methylphenyl)pentaerythritol-di-phosphite, 2,2-methylenebis(4,6-di-t-butylphenyl)octyl phosphite, **4,4'-**butylidene-bis-(3-methyl-6-t-butylphenyl-di-tridecyl) phosphite, 1,1,3-tris(2-methyl-4-di-tridecyl phosphite-5-t-butyl-phenyl)butane, tris(mixed mono-and di-nonylphenyl) phosphite, tris(nonylphenyl) phosphite and **4,4'-**isopropylidenebis(phenyl-dialkyl phosphite). Among them, tris(2,4-di-t-butylphenyl) phosphite, 2,2-methylenebis(4,6-di-t-butylphenyl)octyl phosphite and bis(2,6-di-t-butyl-4-methylphenyl)pentaerythritol-di-phosphite.
Specific examples of the phosphonite compounds include tetrakis(2,4-di-t-butylphenyl)-4,4'-biphenylene diphosphonite, tetrakis(2,5-di-t-butylphenyl)-4,4'-biphenylene diphosphonite, tetrakis(2,3,4-trimethylphenyl)-4,4'-biphenylene diphosphonite, tetrakis(2,3-dimethyl-5-ethylphenyl)-4,4'-biphenylene diphosphonite, tetrakis(2,6-di-t-butyl-5-ethylphenyl)-4,4'-biphenylene diphosphonite, tetrakis(2,3,4-tributylphenyl)-4,4'-biphenylene diphosphonite and tetrakis(2,4,6-tri-t-butylphenyl)-4,4'-biphenylene diphosphonite. Among them, tetrakis(2,4-di-t-butylphenyl)-4,4'-biphenylene diphosphonite is preferable.
The lower limit value of the content of the phosphorus stabilizer (g) contained in the PPE resin composition (Z) is 0.5 parts by mass or more, preferably 1 part by mass or more, more preferably 1.2 parts by mass or more, per 100 parts by mass of the polyphenylene ether-containing resin (A). The upper limit value of the content of the phosphorus stabilizer (f) per 100 parts by mass of the polyphenylene ether-containing resin (A) is 3 parts by mass or less, preferably 2.5 parts by mass or less, more preferably 2 parts by mass or less. By containing the phosphorus stabilizer (g) whose content falls within this range in the PPE resin composition (Z), heat stability during use or melt-kneading in the production and molding steps of the PPE resin composition (Z) can be improved, and flame retardancy of the PPE resin composition (Z) can be improved.
Per 100 mass% of the PPE resin composition (Z), the total content of the polyphenylene ether resin (a), the styrene resin (b), the inorganic filler (c), the phosphorus flame retardant (d), the polyolefin resin (e), the tracking resistance improver (f), and the phosphorus stabilizer (g), all of which are contained in the PPE resin composition (Z), is preferably 95 mass% or more, more preferably 97 mass% or more, still more preferably 98 mass% or more, particularly preferably 99 mass% or more. By setting the total content within the above range, the PPE resin composition (Z) further excellent in tracking resistance, flame retardancy, and impact resistance can be obtained.

[Mass ratio of polyolefin resin to phosphorus component in PPE resin composition]

Next, the mass ratio of the polyolefin resin (e) to a phosphorus component in the PPE resin composition (Z) according to the embodiment of the present invention will be described in detail. As described above, the PPE resin composition (Z) contains components such as the polyolefin resin (e). The PPE resin composition (Z) contains a phosphorus component. The mass ratio (E/P) of the polyolefin resin (e) to the phosphorus component in the PPE resin composition (Z) as described above is 0.2 to 2.65.
Specifically, the PPE resin composition (Z) contains the above-described phosphorus flame retardant (d) and phosphorus stabilizer (g). That is, the phosphorus component in the PPE resin composition (Z) includes at least the phosphorus component in the phosphorus flame retardant (d) and the phosphorus component in the phosphorus stabilizer (g). The mass ratio (E/P) in the PPE resin composition (Z) as described above is a ratio (= (E)/(P)) of the content mass (E) of the polyolefin resin (e) to the total content mass (P) of the phosphorus component in the PPE resin composition (Z). The polyolefin resin (e), the phosphorus flame retardant (d), and the phosphorus stabilizer (g) are each contained in the PPE resin composition (Z) so as to satisfy the range of the content per 100 parts by mass of the polyphenylene ether-containing resin (A) described above and the range of the mass ratio (E/P) described above.
Note that the content mass (P) of the phosphorus component in the PPE resin composition (Z) can be quantified by, for example, inductively coupled plasma (ICP) optical emission spectrometry. Specifically, the PPE resin composition (Z) is subjected to wet acid digestion, the inorganic filler (c) is separated by filtration, and then a specific volume of solution obtained by precise and accurate measurement is introduced into the ICP optical emission spectrometer to measure the

phosphorus concentration. From the measured value of phosphorus concentration, the content mass (P) of the phosphorus component in the PPE resin composition (Z) can be calculated. As the ICP optical emission spectrometer, for example, Ultima2C manufactured by HORIBA, Ltd. can be used. The content mass (P) of the phosphorus component may be a value obtained by deriving each of the content mass of the phosphorus component in the phosphorus flame retardant (d) and the content mass of the phosphorus component in the phosphorus stabilizer (g) by analysis of the molecular structure or the like, and then summing the derived content masses of the phosphorus components. For example, the content mass of the phosphorus component in the phosphorus stabilizer (g) may be derived by deriving the mass ratio of phosphorus atoms to the molecular weight of the phosphorus stabilizer (g) from the analysis result of the molecular structure, and then multiplying the derived mass ratio by the added amount of the phosphorus stabilizer (g). Alternatively, when the phosphorus stabilizer (g) is a commercially available product, the content mass of the phosphorus component in the phosphorus stabilizer (g) may be derived by multiplying the mass ratio of the phosphorus component set for the commercially available product by the added amount of the phosphorus stabilizer (g). Note that the content mass of the phosphorus component in the phosphorus flame retardant (d) may also be derived in the same manner as in the case of the above phosphorus stabilizer (g).

[Additive]

Next, the additive applied to the PPE resin composition (Z) according to the embodiment of the present invention will be described in detail. Within the scope not departing from the spirit of the present invention, the PPE resin composition (Z) may further contain additives other than the above-described polyphenylene ether-containing resin (A), inorganic filler (c), phosphorus flame retardant (d), polyolefin resin (e), tracking resistance improver (f), and phosphorus stabilizer (g). Examples of the additive include heat stabilizers other than the phosphorus stabilizer (g), ultraviolet absorbers, antioxidants, weatherability improvers, foaming agents, lubricants, plasticizers, fluidity improvers, dispersants, conductive agents, antistatic agents, and colorants.
Examples of the heat stabilizer other than the phosphorus stabilizer (g) (hereinafter, such a heat stabilizer is referred to as a stabilizer (h)) among the above additives include hindered phenol compounds, sulfur compounds, and zinc oxide. One of these compounds may be used alone as the stabilizer (h), or two or more thereof may be mixed and used.
Specific examples of the hindered phenol compounds include n-octadecyl-3-(3',5'-di-t-butyl-4'-hydroxyphenyl) propionate, 1,6-hexanediol-bis[3-(3',5'-dit-butyl-4'-hydroxyphenyl) propionate], pentaerythritol-tetrakis[3-(3',5'-di-t-butyl-4'-hydroxyphenyl) propionate], 2,6-di-t-butyl-4-methylphenol, 3,9-bis[1,1-dimethyl-2-{β-(3-t-butyl-4-hydroxy-5-methylphenyl)propionyloxy}ethyl]-2,4,8,10-tetraoxaspiro[5,5]undecane, triethylene glycol-bis[3-(3-t-butyl-5-methyl-4-hydroxyphenyl) propionate], 3,5-di-t-butyl-4-hydroxybenzylphosphonate-diethyl ester, 1,3,5-trimethyl-2,4,6-tris(3',5'-di-t-butyl-4'-hydroxybenzyl)benzene, 2,2-thio-diethylenebis[3-(3',5'-dit-butyl-4'-hydroxyphenyl) propionate], tris-(3,5-di-t-butyl-4-hydroxybenzyl)-isocyanurate and N,N'-hexamethylenebis(3,5-di-t-butyl-4-hydroxyhydrocinnamamide). Among them, n-octadecyl-3-(3',5'-di-t-butyl-4'-hydroxyphenyl) propionate, 1,6-hexanediol-bis[3-(3',5'-di-t-butyl-4'-hydroxyphenyl) propionate], 2,6-di-t-butyl-4-methylphenol, and 3,9-bis[1,1-dimethyl-2-{β-(3-t-butyl-4-hydroxy-5-methylphenyl)propionyloxy}ethyl]-2,4,8,10-tetraoxaspiro[5,5]undecane are preferable.
Specific examples of the sulfur compound include didodecyl thiodipropionate, ditetradecyl thiodipropionate, dioctadecyl thiodipropionate, pentaerythritol tetrakis(3-dodecyl thiopropionate), pentaerythrityl tetrakis(3-tetradecyl thiopropionate), pentaerythrityl tetrakis(3-tridecyl thiopropionate), thiobis(N-phenyl-β-naphthylamine), 2-mercaptobenzotriazole, 2-mercaptobenzimidazole, tetramethyl thiuram monosulfide, tetramethyl thiuram disulfide, nickel dibutyl dithiocarbamate, nickel isopropyl xanthate, and trilauryl trithiophosphite. Among them, in particular, a thioether antioxidant having a thioether structure can be suitably used as the stabilizer (h) since the thioether antioxidant receives oxygen from an oxidized substance and reduces the oxidized substance. The lower limit of the molecular weight of the sulfur compound is usually 200 or more, preferably 500 or more. The upper limit of the molecular weight of the sulfur compound is usually 3000 or less.
The zinc oxide preferably has, for example, an average particle size of 0.02 to 1 μm, more preferably has an average particle size of 0.08 to 0.8 μm.
For example, when the PPE resin composition (Z) contains the stabilizer (h), the content of the stabilizer (h) per 100 parts by mass of the polyphenylene ether-containing resin (A) is preferably 0.001 to 1 part(s) by mass, more preferably 0.01 to 0.7 parts by mass, still more preferably 0.02 to 0.5 parts by mass. When the lower limit of the content of the stabilizer (h) is 0.001 parts by mass or more, the effect of improving the heat stability of the PPE resin composition (Z) can be sufficiently obtained. When the upper limit of the content of the stabilizer (h) is 1 part by mass or less, it is possible to prevent the occurrence of contamination of the mold in molding the PPE resin composition (Z), a decrease in the mechanical strength of the PPE resin composition (Z), and the like.
Examples of the colorant among the above additives include black pigments (i), white pigments, and dyes. The PPE resin composition (Z) may contain at least one of colorants for the purpose of toning.
Examples of the black pigment (i) include carbon blacks, carbon nanotubes, and thermoplastic resin masterbatches using these pigments. When the PPE resin composition (Z) contains the black pigment (i), the content of the black pigment (i) per 100 parts by mass of the polyphenylene ether-containing resin (A) is preferably 2.0 parts by mass or less, more preferably 1.5 parts by mass or less, still more preferably 1.0 parts by mass or more, particularly preferably 0.5 parts by mass or less. The lower limit value of the content of the black pigment (i) is not particularly limited as long as the toning of the PPE resin composition (Z) can be performed, but is preferably 0.01 parts by mass or more. By containing the black pigment (i) whose content falls within this range in the PPE resin composition (Z), toning can be performed without impairing the tracking resistance of the PPE resin composition (Z).

Examples of the white pigment include titanium oxide and zinc sulfide. When the PPE resin composition (Z) contains the white pigment, the content of the white pigment per 100 parts by mass of the polyphenylene ether-containing resin (A) is preferably 7.0 parts by mass or less, more preferably 4.0 parts by mass or less, still more preferably 3.0 parts by mass or less, particularly preferably 2.0 parts by mass or less. The lower limit value of the content of the white pigment is not particularly limited as long as the toning of the PPE resin composition (Z) can be performed, but is preferably 0.01 parts by mass or more. By containing the white pigment whose content falls within this range in the PPE resin composition (Z), toning can be performed without impairing the mechanical strength of the PPE resin composition (Z).

Among the additives described above, the PPE resin composition (Z) may contain one additive or an additive in which two or more additives are blended. The PPE resin composition (Z) can effectively exhibit the function of each additive contained therein. For example, when a weatherability improver and a lubricant are blended in the PPE resin composition (Z), the weatherability of the PPE resin composition (Z) and the releasability from a mold during injection molding tend to be improved.

[Method for producing PPE resin composition (Z)]

Next, the method for producing the PPE resin composition (Z) according to the embodiment of the present invention will be described in detail. The method for producing the PPE resin composition (Z) is not limited to a specific method, and a publicly known method can be adopted. Examples of the production method include a melt-kneading method and a solution mixing method. The melt-kneading method uses a kneader to melt-knead various components blended as necessary, such as the above-described polyphenylene ether-containing resin (A), inorganic filler (c), phosphorus flame retardant (d), polyolefin resin (e), tracking resistance improver (f), and phosphorus stabilizer (g), and then cools and solidifies the kneaded product. The solution mixing method adds the above various components to an appropriate solvent, and components to be dissolved are mixed, or components to be dissolved and insoluble components are mixed in a suspended state. Examples of the kneader used in the production method include a single screw extruder, a multi screw extruder, a Banbury mixer, a roll, and a Brabender Plastograph. Examples of the above solvent include hydrocarbons such as hexane, heptane, benzene, toluene, and xylene, and derivatives thereof.

From the viewpoint of industrial cost, a melt-kneading method is preferable as a method for producing the PPE resin composition (Z). In the melt-kneading method, the kneading temperature and the kneading time can be freely selected in accordance with conditions such as the type of the desired PPE resin composition (Z) and the type of a kneader. For example, the kneading temperature is preferably 200 to 350°C, more preferably 220 to 320°C. The kneading time is preferably 20 minutes or less. Higher than 350°C of the kneading temperature may cause thermal degradation of the polyphenylene ether resin (a) or the styrene resin (b) contained in the polyphenylene ether-containing resin (A). As a result, a molded article of the PPE resin composition (Z) may have deteriorated physical properties or poor appearance.

[Molded article]

Next, the molded article according to an embodiment of the present invention will be described in detail. The molded article according to the embodiment of the present invention includes the PPE resin composition (Z) described above. For example, the PPE resin composition (Z) is pelletized to obtain pellets, and the pellets are then molded by any of various molding methods, whereby the molded article can be produced. The molded article may be produced without being pelletized, by directly molding the PPE resin composition (Z) melt-kneaded by a kneader.

The method for molding the PPE resin composition (Z) is not limited to a specific method, and a publicly known method can be adopted. Examples of the method for molding the PPE resin composition (Z) include various molding methods such as injection molding, injection compression molding, hollow molding, extrusion molding, sheet molding, thermoforming, rotational molding, laminate molding, and press molding.

The molded article produced by the above-described molding method includes the PPE resin composition (Z) according to the embodiment of the present invention, and thus has excellent properties of various components contained in the PPE resin composition (Z). In particular, the molded article simultaneously has the following properties: high flame retardancy due to the polyphenylene ether resin (a), the phosphorus flame retardant (d), the phosphorus stabilizer (g), and the like; high mechanical strength due to the inorganic filler (c) and the like; and high tracking resistance due to the polyolefin resin (e), the tracking resistance improver (f), and the like. Among them, the molded article tends to provide a

desired high level of impact resistance by the combination of the polyphenylene ether resin (a) and the polyolefin resin (e). The molded article can provide a desired high level of flame retardancy and tracking resistance by the above control of the mass ratio of the polyolefin resin (e) to the phosphorus component in the PPE resin composition (Z). In addition to the above characteristics, the molded article can have excellent properties such as high impact resistance and high processability due to the styrene resin (b) and the like, low specific gravity, high dimensional accuracy, high hydrolysis resistance, high dimensional stability, and high mechanical properties.

Such a molded article has excellent properties as described above, and thus can be widely used for various applications such as automobile-related components, electronic device-related components, and battery-related components.

Specifically, examples of the automobile-related component to which the molded article according to the embodiment of the present invention is applied include exterior components, outer panel components, interior components, and under-the-hood components for an automobile. More specifically, examples of the exterior component or the outer panel component for an automobile include components such as a bumper, a fender, a door panel, a molding, an emblem, an engine hood, a wheel cover, a roof, a spoiler, and an engine cover. Examples of interior components for automobiles include an instrument panel and a console box trim.

Examples of the electronic device-related component to which the molded article according to the embodiment of the present invention is applied include a computer component, a computer peripheral device component, an OA equipment component, a television component, a video cassette recorder component, various disc player components, and cabinets and chassis for these electronic devices, a refrigerator component, an air conditioning device component, and a liquid crystal projector component.

Examples of the battery-related component to which the molded article according to the embodiment of the present invention is applied include components such as a battery unit housing, an electrolytic bath for a secondary battery, a fuel case for a direct methanol fuel cell, and a water supply pipe for a fuel cell.

The molded article according to the embodiment of the present invention is also applicable to components in fields other than the automobile-related, electronic device-related, and battery-related fields described above (other fields). Examples of components in the other fields include water cooling tanks, exterior cases for boilers, ink peripheral components, members, and chassis of inkjet printers. In addition to these, the molded article according to the embodiment of the present invention is also applicable to a molded body such as a water supply pipe and a joint, a separator for lithium ion batteries that is obtained by stretching a sheet or a film, and the like.

As described above, the PPE resin composition (Z) according to the embodiment of the present invention contains the polyphenylene ether-containing resin (A) containing at least more than 80 mass% of the polyphenylene ether resin (a), and per 100 parts by mass of the polyphenylene ether-containing resin (A), contains 5 to 25 parts by mass of the inorganic filler (c), 15 to 27 parts by mass of the phosphorus flame retardant (d), 0.3 to 7 parts by mass of the polyolefin resin (e) having an ethylene-derived skeleton, 3 to 20 parts by mass of the tracking resistance improver (f), and 0.5 to 3 parts by mass of the phosphorus stabilizer (g). At this time, the mass ratio of the polyolefin resin (e) to the phosphorus component in the PPE resin composition (Z) falls within a range of 0.2 to 2.65.

Therefore, excellent heat resistance due to the polyphenylene ether resin (a) can be obtained, the mechanical strength can be enhanced by the inorganic filler (c), and tracking resistance reduced due to the inorganic filler (c) can be improved by the polyolefin resin (e). In addition to the above, the impact resistance can be improved by the combination of the polyphenylene ether resin (a) and the polyolefin resin (e). At the same time, while the flame retardancy reduced due to the polyolefin resin (e) is improved by the phosphorus flame retardant (d), the tracking resistance and the flame retardancy can be stably improved by the tracking resistance improver (f) and the phosphorus stabilizer (g). Furthermore, the improvement in tracking resistance, flame retardancy, and impact resistance can be secured by controlling the mass ratio of the polyolefin resin (e) to the above phosphorus component. As a result, the PPE resin composition (Z) can simultaneously have high tracking resistance, excellent flame retardancy, and excellent impact resistance.

In the PPE resin composition (Z) according to the embodiment of the present invention, the polyphenylene ether-containing resin contains 85 to 100 mass% of the polyphenylene ether resin (a) and 0 to 15 mass% of the styrene resin (b). Therefore, the polyphenylene ether resin (a) and the styrene resin (b) provide excellent heat resistance, processability (moldability), and mechanical properties, and the styrene resin (b) can further improve impact resistance while maintaining the excellent flame retardancy described above.

By mold-processing the PPE resin composition (Z) described above, a molded article gaining the effect of the PPE resin composition (Z) can be easily obtained. Such a molded article can have various properties required depending on the application (tracking resistance, flame retardancy, impact resistance, and the like) by selecting the constituent components of the PPE resin composition (Z) as a material.

[Examples]

Hereinafter, the present invention will be described more specifically by providing examples. It should be noted

that the present invention is not to be construed as being limited to the following examples.

(Examples 1 to 18 and Comparative Examples 1 to 9)

[Components of polyphenylene ether resin composition]

The components of the polyphenylene ether resin composition (PPE resin composition) in each of Examples 1 to 18 and Comparative Examples 1 to 9 are as provided in Tables 1-1 and 1-2.

In each of Examples 1 to 18, the polyphenylene ether resin (a), the styrene resin (b), the inorganic filler (c), the phosphorus flame retardant (d), the polyolefin resin (e) having an ethylene-derived skeleton, the tracking resistance improver (f), the phosphorus stabilizer (g), the other stabilizer (h), and the black pigment (i) listed in Table 1-1 are used as necessary. Note that the other stabilizer (h) is an example of an additive added to the above-described PPE resin composition (Z) as necessary, and specifically, is a heat stabilizer other than the phosphorus stabilizer (g). For example, a hindered phenol stabilizer is used as the stabilizer (h).

In each of Comparative Examples 1 to 9, the above-described components and a polyolefin resin (x) and a polyethylene wax (y) listed in Table 1-2 are used as necessary. The polyolefin resin (x) is a polyolefin resin having no ethylene-derived skeleton or a polyolefin resin having low fluidity. The polyolefin resin having low fluidity is a polyolefin resin having an ethylene-derived skeleton but having a low MRF as compared to the polyolefin resin (e) used in Examples 1 to 18. Each of the polyolefin resin (x) and the polyethylene wax (y) is used instead of the polyolefin resin (e) having an ethylene-derived skeleton. For example, as the polyolefin resin (x) having no ethylene-derived skeleton, an ethylene-free propylene-butene copolymer is used as a material for a polymerization reaction. As the polyolefin resin (x) having low fluidity, a low-fluidity and high-density polyethylene resin is used.

As indicated in Table 1-1, a component (a-1) is used as the polyphenylene ether resin (a). As the styrene resin (b), a component (b-1), a component (b-2), or a component (b-3) is used. As the inorganic filler (c), a component (c-1) is used. As the phosphorus flame retardant (d), a component (d-1), a component (d-2), and a component (d-3) are used with their contents appropriately changed. As the polyolefin resin (e), a component (e-1), a component (e-2), or a component (e-3) is used. As the tracking resistance improver (f), a component (f-1) is used. As the phosphorus stabilizer (g), a component (g-1) is used. As the stabilizer (h), a component (h-1) is used. As the black pigment (i), a component (i-1) is used. As indicated in Table 1-2, a component (x-1) or a component (x-2) is used as the polyolefin resin (x). As the polyethylene wax (y), a component (y-1) is used.

The MFRs described in Tables 1-1 and 1-2 are melt flow rates measured in conformity with JIS K7210. Among the measurement conditions of the MFRs, the temperature is 190°C as indicated in Tables 1-1 and 1-2. Note that although not indicated in Tables 1-1 and 1-2, the load is 2.16 kg.

Table 1-1

| Classification of components | Symbol | Trade name | Details |
|---|---|---|---|
| Polyphenylene ether resin (a) | (a-1) | PX100L | Polyphenylene ether resin, manufactured by Polyxylenol Singapore Pte. Ltd. |
| Styrene resin (b) | (b-1) | Toyo Styrene XL1 | High impact polystyrene, manufactured by Toyo Styrene Co., Ltd. |
| | (b-2) | Toyo Styrene XL4 | High impact polystyrene, manufactured by Toyo Styrene Co., Ltd. |
| | (b-3) | PSJ-POLYSTYRENE HIPSHT478 | High impact polystyrene, manufactured by PS Japan Corporation |
| Inorganic filler (c) | (c-1) | ECS 03T-852H | Glass fibers (E glass), manufactured by Nippon Electric Glass Co., Ltd., Diameter: 10 μm, Length: 3 mm |

(continued)

| Classification of components | Symbol | Trade name | Details |
|---|---|---|---|
| Phosphorus flame retardant (d) | (d-1) | CR-733S | Condensed phosphate flame retardant, manufactured by DAIHACHI CHEMICAL INDUSTRY CO., LTD., Phosphorus content: 10.9 mass% |
| | (d-2) | PX200 | Condensed phosphate flame retardant, manufactured by DAIHACHI CHEMICAL INDUSTRY CO., LTD., Phosphorus content: 9.0 mass% |
| | (d-3) | TPP | Phosphate flame retardant, manufactured by DAIHACHI CHEMICAL INDUSTRY CO., LTD., Phosphorus content: 9.5 mass% |
| Polyolefin resin (e) (having an ethylene-derived skeleton) | (e-1) | TAFMER P-0180 | Ethylene-propylene copolymer, manufactured by Mitsui Chemicals, Inc., MFR at temperature of 190°C = 4.4 g/10 min |
| | (e-2) | NOVATEC HDHY340 | High-density polyethylene resin, manufactured by Japan Polyethylene Corporation, MFR at temperature of 190°C = 1.4 g/10 min |
| | (e-3) | TAFMER DF940 | Ethylene-butene copolymer, manufactured by Mitsui Chemicals, Inc., MFR at temperature of 190°C = 3.6 g/10 min |
| Tracking resistance improver (f) | (f-1) | CALCITECH VIGOT-15 | Calcium carbonate surface-treated with fatty acid, manufactured by Shiraishi Kogyo Kaisha, Ltd., Average particle size: 0.2 μm |
| Phosphorus stabilizer (g) | (g-1) | ADK STAB 2112 | Phosphite stabilizer, manufactured by ADEKA CORPORATION, Phosphorus content: 4.8 mass% |
| Stabilizer (h) (other than phosphorus stabilizer) | (h-1) | Irganox 1010 | Hindered phenol stabilizer, manufactured by BASF Japan Ltd. |
| Black pigment (i) | (i-1) | BLACK-SBF M8800 | Black pigment polystyrene masterbatch, manufactured by RESINO COLOR INDUSTRY CO., LTD., Carbon black: 45 to 55 mass% |

Table 1-2

| Classification of components | Symbol | Trade name | Details |
|---|---|---|---|
| (Polyolefin resin (x) having no ethylene-derived skeleton or having a low fluidity) | (x-1) | TAFMER XM-5070 | Propylene-butene copolymer, manufactured by Mitsui Chemicals, Inc., MFR at temperature of 190°C = 3.0 g/10 min |
| | (x-2) | NOVATEC HDHY420 | High-density polyethylene resin, manufactured by Japan Polyethylene Corporation, MFR at temperature of 190°C = 0.4 g/10 min |
| Polyethylene wax (y) | (y-1) | SANWAX 151P | Polyethylene wax, manufactured by Sanyo Chemical Industries, Ltd., Viscosity at temperature of 140°C = 250 mPa·s |

[Method for producing pellets of PPE resin composition]

In each of Examples 1 to 18 and Comparative Examples 1 to 9, the components listed in Tables 1-1 and 1-2 described above were mixed at the proportions (parts by mass) indicated in Tables 2-1 to 2-3 to be described later, and a

mixture of the above components was melt-kneaded using a twin screw extruder (TEM18SS manufactured by SHIBAURA MACHINE CO., LTD.) at a cylinder temperature of 280°C and a screw rotation speed of 300 rpm. In this way, a PPE resin composition was prepared. Thereafter, the strand of the PPE resin composition was extruded, and the extruded strand was cut (pelletized) to obtain pellets of the PPE resin composition. Using the obtained pellets of the PPE resin composition, the following evaluations were performed.

[Tracking resistance evaluation]

In each of Examples 1 to 18 and Comparative Examples 1 to 9, a molded article of a PPE resin composition prepared using pellets obtained by the above production method was evaluated in terms of tracking resistance. Specifically, pellets of the PPE resin composition produced by the production method described above were dried at 100°C for two hours and then supplied to an injection molding machine (EC160NII manufactured by SHIBAURA MACHINE CO., LTD.). Using this injection molding machine, a molded article containing the PPE resin composition and having length × width × thickness = 100 mm × 150 mm × 3.2 mm was prepared. As injection molding conditions at that time, the cylinder temperature was set to 280°C, and the mold temperature was set to 70°C. Using the molded article thus prepared, the maximum voltage in a range in which tracking breakdown of the molded article did not occur, namely the CTI value (unit: V), was measured by a measurement method in conformity with IEC 60112(electrolytic solution used: solution A, the number of drops: 50).

[Flame retardancy evaluation]

In each of Examples 1 to 18 and Comparative Examples 1 to 9, a test specimen of the PPE resin composition prepared using pellets obtained by the above production method was evaluated in terms of flame retardancy. Specifically, pellets of the PPE resin composition produced by the production method described above were dried at 100°C for two hours and then supplied to an injection molding machine (EC75SX manufactured by SHIBAURA MACHINE CO., LTD.). Using this injection molding machine, a test specimen for a flammability test, containing the PPE resin composition and having length × width × thickness = 125 mm × 13 mm × 1.5 mm, was molded. As injection molding conditions at that time, the cylinder temperature was set to 280°C, and the mold temperature was set to 70°C.

Next, for the test specimen for a flammability test obtained as described above, a vertical flammability test (UL94V test: 1.5 mmt) of a set of five pieces conforming to the UL94 standard was performed twice. In the flame retardancy evaluation in each of Examples 1 to 18 and Comparative Examples 1 to 9, the grade based on the vertical flammability test was determined for each set. The grades include V-0, V-1, and V-2 in order from a good grade. In the flame retardancy evaluation, the maximum combustion time was 30 seconds or more, and a result not falling into any grade was determined as poor. When results (grade determination results) obtained by the two vertical flammability tests were different from each other, the lower grade was adopted as the result of flame retardancy evaluation.

[Heat resistance evaluation]

In each of Examples 1 to 18 and Comparative Examples 1 to 9, a test specimen of the PPE resin composition prepared using pellets obtained by the above production method was evaluated in terms of heat resistance. Specifically, pellets of the PPE resin composition produced by the production method described above were dried at 100°C for two hours and then supplied to an injection molding machine (EC75SX manufactured by SHIBAURA MACHINE CO., LTD.). Using this injection molding machine, a type A test specimen defined in ISO-3167:93 (hereinafter, referred to as an ISO test specimen) was obtained by inject molding in conformity with ISO-15103. As injection molding conditions at that time, the cylinder temperature was set to 280°C, and the mold temperature was set to 70°C.

Next, the parallel-sided portion of the above ISO test specimen was machined in conformity with ISO-75-2, thereby preparing a strip-shaped test specimen of length × width × thickness = 80 mm × 10 mm × 4 mm. The deflection temperature under load (unit: °C) was measured under the condition of a load of 1.80 MPa using this test specimen.

[Impact resistance evaluation]

In each of Examples 1 to 18 and Comparative Examples 1 to 9, an ISO test specimen obtained by the same method as in the heat resistance evaluation described above was evaluated in terms of impact resistance. Specifically, in conformity with ISO-179-1 and ISO-179-2, an ISO test specimen was cut, whereby the portions to be held at both ends of the ISO test specimen were cut out, and the central portion of the ISO test specimen was notched to prepare a Charpy notched impact test specimen. For the Charpy impact test specimen thus obtained, as the impact resistance evaluation, Charpy impact strength (unit: $kJ/m^2$) at a temperature of 23°C was measured by a measurement method in conformity with ISO-179-1 and ISO-179-2.

[Mechanical strength evaluation]

In each of Examples 1 to 18 and Comparative Examples 1 to 9, an ISO test specimen obtained by the same method as in the heat resistance evaluation described above was used to evaluate the mechanical strength thereof. Specifically, as one of the evaluations of mechanical strength, the tensile strength (unit: MPa) of the ISO test specimen was measured by a measurement method in conformity with ISO-527.

In the mechanical strength evaluation, the parallel-sided portion of the ISO test specimen obtained as described above was machined to prepare a strip-shaped test specimen of length × width × thickness = 80 mm × 10 mm × 4 mm. The flexural strength (unit: MPa) and flexural modulus (unit: MPa) of the test specimen was measured in an environment of a temperature of 23°C and a humidity of 50% by a measurement method conforming to ISO-178.

[Evaluation results]

Tables 2-1 to 2-3 provide the content proportions (parts by mass) of the components of the PPE resin composition and the results of the above-described evaluations in each of Examples 1 to 18 and Comparative Examples 1 to 9. In Tables 2-1 to 2-3, "Total content of component (d)" means the total content (parts by mass) of the components (d-1) to (d-3) contained as the phosphorus flame retardant (d) in the PPE resin composition. "Phosphorus content (P)" means the content of the phosphorus component contained in the PPE resin composition, and is calculated based on the added amount. "Mass ratio (E/P)" means a mass ratio of the polyolefin resin to the phosphorus component in the PPE resin composition. When the polyolefin resin (e) is contained in the PPE resin composition, the mass ratio (E/P) is a mass ratio of the polyolefin resin (e) to the above phosphorus component. When the component (x-1) or the component (x-2) is contained in the PPE resin composition as the polyolefin resin (x) instead of the above polyolefin resin (e), the mass ratio (E/P) is a mass ratio of the polyolefin resin (x) to the above phosphorus component. When the component (y-1) is contained in the PPE resin composition as the polyethylene wax (y) instead of the above polyolefin resin (e), the mass ratio (E/P) is a mass ratio of the polyethylene wax (y) to the above phosphorus component. "DTUL" means the deflection temperature under load described above.

In Examples 1 to 18, results of the evaluations in terms of tracking resistance, impact resistance, flame retardancy, heat resistance, and mechanical strength (tensile strength, flexural strength, and flexural modulus) as indicated in Tables 2-1 and 2-2 were obtained.

Specifically, as a result of the tracking resistance evaluation in each of Examples 1 to 18, the CTI values indicated in Tables 2-1 and 2-2 were obtained. In any of Examples 1 to 18, the CTI value was 250 V or more. Among them, in Examples 1, 2, 4 to 6, 9, 11 to 13, and 16 to 18, the CTI value was 275 V or more. In particular, in Example 11, a high CTI value (= 275 V) was obtained even when the amount of the component (i-1) as the black pigment (i) was increased as compared with other examples.

As a result of the impact resistance evaluation in each of Examples 1 to 18, Charpy impact strengths indicated in Tables 2-1 and 2-2 were obtained. In any of Examples 1 to 18, the Charpy impact strength was 9.0 $kJ/m^2$ or more. Among them, in Examples 1, 2, 5 to 9, 11 to 14, and 18, the Charpy impact strength was 9.4 $kJ/m^2$ or more. In particular, in Example 10, although the styrene resin (b) effective for improving impact resistance was not contained, a Charpy impact strength of 9.0 $kJ/m^2$ or more was obtained by adjusting the content ratio between the component (a-1) as the polyphenylene ether resin (a) and the component (e-1) as the polyolefin resin (e).

As a result of the flame retardancy evaluation in each of Examples 1 to 18, grades based on the UL94V test were obtained as indicated in Tables 2-1 and 2-2. In any of Examples 1 to 18, the grade was V-0. In particular, in Example 16, the amount of the phosphorus flame retardant (d) was increased, the styrene resin (b) was contained, and the content ratio between the polyphenylene ether resin (a) and the polyolefin resin (e) was adjusted, so that high Charpy impact strength (= 9.0 $kJ/m^2$) was successfully obtained while V-0 as a flame retardancy grade was secured. In Example 18, the amounts of the phosphorus flame retardant (d) and the polyolefin resin (e) were increased so that the mass ratio (E/P) of the polyolefin resin (e) to the phosphorus component fell within the range of 0.2 to 2.65. In this way, a high CTI value (= 275 V) and a high Charpy impact strength (= 9.4 $kJ/m^2$) were successfully obtained while V-0 as a flame retardancy grade was secured.

From the above, all of Examples 1 to 18 successfully had high tracking resistance with a CTI value ≥ 250 V, excellent impact resistance with a Charpy impact strength ≥ 9.0 $kJ/m^2$, and excellent flame retardancy with a grade "V-0" at the same time.

As a result of the heat resistance evaluation in each of Examples 1 to 18, DTUL indicated in Tables 2-1 and 2-2 was obtained. In any of Examples 1 to 18, DTUL was 100°C or higher, and excellent heat resistance was successfully obtained. As a result of the mechanical strength evaluation in each of Examples 1 to 18, the values of the tensile strength, flexural strength, and flexural modulus indicated in Tables 2-1 and 2-2 were obtained. Specifically, in any of Examples 1 to 18, the tensile strength was 89 MPa or more, the flexural strength was 143 MPa or more, and the flexural modulus was 4,235 MPa or more. As described above, in any of Examples 1 to 18, a high mechanical strength was successfully obtained.

On the other hand, as indicated in Table 2-3, the PPE resin composition of Comparative Example 1 is a resin composition containing not the polyolefin resin (e) having an ethylene-derived skeleton but the polyolefin resin (x) (component (x-1)) having no ethylene-derived skeleton. In Comparative Example 1 as described above, since the effect of improving the impact resistance by the combination of the polyphenylene ether resin (a) and the ethylene-derived skeleton in the polyolefin resin (e) was not obtained, the Charpy impact strength was less than 9.0 kJ/$m^2$, and the impact resistance was lower than those in Examples 1 to 18.

In Comparative Example 1, the mass ratio (E/P) of the polyolefin resin (x) to the phosphorus component in the PPE resin composition fell in the range of 0.2 to 2.65, but in terms of flame retardancy, none of the criteria of the grades (V-0, V-1, V-2) based on the UL94V test were satisfied, and the PPE resin composition was poor. This result is considered because the polyolefin resin used to the calculation of the above mass ratio (E/P) was the polyolefin resin (x) having no ethylene-derived skeleton. That is, as can be found from the above, even when the above mass ratio (E/P) satisfies 0.2 to 2.65, improvement of the flame retardancy is difficult unless the polyolefin resin used to the calculation of the above mass ratio (E/P) is the polyolefin resin (e) having an ethylene-derived skeleton.

As indicated in Table 2-3, the PPE resin composition of Comparative Example 2 is a resin composition having a mass ratio (E/P) of the polyolefin resin (e) to the phosphorus component contained of 2.69, which does not satisfy the range of the mass ratio (E/P) in the present invention (0.2 to 2.65). In Comparative Example 2 as described above, in terms of flame retardancy, the grade based on the UL94V test was V-1, and the V-0 criteria were not successfully satisfied. As can be found from this result, even when the content of the phosphorus flame retardant (d) satisfies the range (15 to 27 parts by mass) in the present invention, improvement of the flame retardancy is difficult unless the mass ratio (E/P) of the polyolefin resin (e) to the phosphorus component in the PPE resin composition falls into the range of 0.2 to 2.65.

As indicated in Table 2-3, the PPE resin compositions of Comparative Examples 3 and 4 are resin compositions not satisfying the range of the content of the tracking resistance improver (f) in the present invention (3 to 20 parts by mass). In Comparative Examples 3 and 4 as described above, the CTI value was less than 250 V in tracking resistance. In particular, in Comparative Example 3, the tracking resistance improver (f) was not contained, and thus the CTI value was lower than that in Comparative Example 4.

As indicated in Table 2-3, the PPE resin composition of Comparative Example 5 does not satisfy the range of the content of the phosphorus stabilizer (g) in the present invention (0.5 to 3 parts by mass). Specifically, the PPE resin composition of Comparative Example 5 does not contain the phosphorus stabilizer (g). In Comparative Example 5 as described above, in terms of flame retardancy, the grade based on the UL94V test was V-1, and the V-0 criteria were not successfully satisfied.

As indicated in Table 2-3, the PPE resin composition of Comparative Example 6 does not satisfy the range of the content of the polyphenylene ether resin (a) in the present invention (more than 80 mass%). Specifically, the PPE resin composition of Comparative Example 6 is a resin composition contains 80 mass% of the polyphenylene ether resin (a) and 20 mass% of the styrene resin (b), per 100 mass% of the polyphenylene ether-containing resin (A). When the amount of the polyphenylene ether-containing resin (A) containing the polyphenylene ether resin (a) and the styrene resin (b) is defined as 100 parts by mass, the value of the content (mass%) of the polyphenylene ether resin (a) is equal to the value of the content (parts by mass) of the polyphenylene ether resin (A) per 100 parts by mass of the polyphenylene ether resin (A). The same applies to the content of the styrene resin (b). In Comparative Example 6 as described above, since the content of the polyphenylene ether resin (a) excellent in flame retardancy was small, the grade based on the UL94V test was V-1, and the V-0 criteria were not successfully satisfied as flame retardancy.

As indicated in Table 2-3, the PPE resin composition of Comparative Example 7 is a resin composition not satisfying the range of the content of the polyolefin resin (e) having an ethylene-derived skeleton (0.3 to 7 parts by mass) and the range of the mass ratio (E/P) in the present invention (0.2 to 2.65). In Comparative Example 7 as described above, since the mass ratio (E/P) of the polyolefin resin (e) to the phosphorus component in the PPE resin composition was less than 0.2, the Charpy impact strength was less than 9.0 kJ/$m^2$, and accordingly, the impact resistance was lower than those in Examples 1 to 18. Furthermore, in Comparative Example 7, since the content of the polyolefin resin (e) effective for improving tracking resistance was less than 0.3 parts by mass, the CTI value was less than 250 V in tracking resistance.

As indicated in Table 2-3, the PPE resin composition of Comparative Example 8 is a resin composition containing not the polyolefin resin (e) used in Examples 1 to 18 but the polyolefin resin (x) (component (x-2)) having a low fluidity compared to the polyolefin resin (e) while having no ethylene-derived skeleton. Specifically, the MFR indicating the fluidity of the component (x-2) is 0.4 g/10 min under the measurement conditions of a temperature of 190°C and a load of 2.16 (see Table 1-2), which is lower than the MFRs of the polyolefin resins (e) of Examples 1 to 18 (see Table 1-1). In Comparative Example 8 as described above, since the fluidity of the component (x-2) is low, the component (x-2) is hardly dispersed in the PPE resin composition. Therefore, even though the component (x-2) was a polyolefin resin having an ethylene-derived skeleton, the flame retardancy of Comparative Example 8 was poor, not satisfying any of the grade criteria based on the UL94V test, due to the deterioration of the dispersion state of the component (x-2) in the PPE resin composition.

As indicated in Table 2-3, the PPE resin composition of Comparative Example 9 is a resin composition containing not the polyolefin resin (e) used in Examples 1 to 18 but the polyethylene wax (y) (component (y-1)). Specifically, since the

component (y-1) is a wax despite having an ethylene-derived skeleton, the fluidity of the component (y-1) is extremely higher than that of the above polyolefin resin (e). In addition, the molecular weight of the component (y-1) is lower than that of the polyolefin resin (e). In Comparative Example 9 as described above, the effect of improving various properties exhibited in the PPE resin composition of Examples 1 to 18 containing components such as the polyolefin resin (e) having appropriate fluidity (e.g., MFR of 0.5 to 100 g/10 min under measurement conditions of a temperature of 190°C and a load of 2.16) was not obtained. That is, the CTI value was less than 250 V in tracking resistance, the Charpy impact strength was less than 9.0 kJ/m$^2$ in impact resistance, and the flame retardancy was poor. In particular, in Comparative Example 9, since the component (y-1) in the PPE resin composition appeared on the surface layer due to deterioration of dispersibility, flame retardancy was deteriorated.

Table 2-1

| | Component (Symbol) | Example 1 | Example 2 | Example 3 | Example 4 | Example 5 | Example 6 | Example 7 | Example 8 | Example 9 |
|---|---|---|---|---|---|---|---|---|---|---|
| Composition of PPE resin composition (parts by mass) | (a-1) | 85.0 | 85.0 | 85.0 | 85.0 | 85.0 | 85.0 | 85.0 | 85.0 | 90.0 |
| | (b-1) | 15.0 | | | | | 15.0 | | | |
| | (b-2) | | 15.0 | | 15.0 | 15.0 | | 15.0 | 15.0 | 10.0 |
| | (b-3) | | | 15.0 | | | | | | |
| | (c-1) | 15.0 | 15.0 | 15.0 | 15.0 | 15.0 | 14.6 | 14.6 | 14.4 | 15.0 |
| | (d-1) | 9.77 | 9.77 | 9.77 | 9.77 | 9.77 | 9.49 | 8.03 | 7.91 | 9.77 |
| | (d-2) | 7.52 | 7.52 | 7.52 | 7.52 | 7.52 | 7.30 | 7.30 | 5.76 | 7.52 |
| | (d-3) | 3.01 | 3.01 | 3.01 | 3.01 | 3.01 | 1.46 | 2.92 | 2.88 | 3.01 |
| | (h-1) | 0.45 | 0.45 | 0.45 | 0.45 | 0.45 | 0.44 | 0.44 | 0.43 | 0.45 |
| | (g-1) | 1.50 | 1.50 | 1.50 | 1.50 | 1.50 | 1.46 | 1.46 | 1.44 | 1.50 |
| | (e-1) | 5.26 | 5.26 | 5.26 | | | 3.65 | 3.65 | 3.60 | 5.26 |
| | (e-2) | | | | 5.26 | | | | | |
| | (e-3) | | | | | 5.26 | | | | |
| | (x-1) | | | | | | | | | |
| | (x-2) | | | | | | | | | |
| | (y-1) | | | | | | | | | |
| | (f-1) | 7.5 | 7.5 | 7.5 | 7.5 | 7.5 | 7.3 | 7.3 | 7.2 | 7.5 |
| | (i-1) | 0.30 | 0.30 | 0.30 | 0.30 | 0.30 | 0.29 | 0.29 | 0.29 | 0.30 |
| Total content of component (d) (parts by mass) | | 20.30 | 20.30 | 20.30 | 20.30 | 20.30 | 18.25 | 18.25 | 16.55 | 20.30 |
| Phosphorus content (P) | | 1.40 | 1.40 | 1.40 | 1.40 | 1.40 | 1.78 | 1.29 | 1.61 | 1.40 |
| Mass ratio (E/P) | | 2.51 | 2.51 | 2.51 | 2.51 | 2.51 | 1.92 | 1.94 | 2.09 | 2.51 |

(continued)

| | Component (Symbol) | Example 1 | Example 2 | Example 3 | Example 4 | Example 5 | Example 6 | Example 7 | Example 8 | Example 9 |
|---|---|---|---|---|---|---|---|---|---|---|
| Evaluation results | Tracking resistance CTI value (V) | 275 | 275 | 250 | 275 | 275 | 275 | 250 | 250 | 275 |
| | Impact resistance Charpy impact strength ($kJ/m^2$) | 9.7 | 9.4 | 9.2 | 9.0 | 9.5 | 9.4 | 9.6 | 9.7 | 10.0 |
| | Flame retardancy (UL 94 V test) | V-0 | V-0 | V-0 | V-0 | V-0 | V-0 | V-0 | V-0 | V-0 |
| | Heat resistance DTUL (°C) | 117 | 118 | 117 | 116 | 116 | 122 | 122 | 125 | 121 |
| | Tensile strength (MPa) | 93.6 | 91.8 | 93.9 | 94.8 | 94.2 | 95.3 | 94.4 | 95.9 | 100.2 |
| | Flexural strength (MPa) | 145 | 144 | 144 | 145 | 145 | 153 | 147 | 148 | 151 |
| | Flexural modulus (MPa) | 4,410 | 4,235 | 4,253 | 4,308 | 4,259 | 4,537 | 4,280 | 4,281 | 4,447 |

Table 2-2

| | Component (Symbol) | Example 10 | Example 11 | Example 12 | Example 13 | Example 14 | Example 15 | Example 16 | Example 17 | Example 18 |
|---|---|---|---|---|---|---|---|---|---|---|
| Composition of PPE resin composition (parts by mass) | (a-1) | 100.0 | 85.0 | 85.0 | 85.0 | 85.0 | 85.0 | 85.0 | 85.0 | 85.0 |
| | (b-1) | | 15.0 | | | | | | | |
| | (b-2) | | | 15.0 | 15.0 | 15.0 | 15.0 | 15.0 | 15.0 | 15.0 |
| | (b-3) | | | | | | | | | |
| | (c-1) | 15.0 | 15.1 | 14.6 | 14.6 | 14.5 | 14.4 | 15.7 | 15.8 | 15.7 |
| | (d-1) | 9.77 | 9.79 | 9.50 | 9.47 | 9.42 | 9.33 | 15.75 | 8.66 | 13.31 |
| | (d-2) | 7.52 | 7.53 | 7.31 | 7.29 | 7.25 | 7.18 | 7.87 | 7.88 | 7.83 |
| | (d-3) | 3.01 | 3.01 | 2.92 | 2.91 | 2.90 | 2.87 | 3.15 | 3.15 | 3.13 |
| | (h-1) | 0.45 | 0.45 | 0.44 | 0.44 | 0.43 | 0.43 | 0.47 | 0.47 | 0.47 |
| | (g-1) | 1.50 | 1.51 | 1.46 | 1.46 | 1.45 | 1.44 | 1.57 | 1.58 | 1.57 |
| | (e-1) | 5.26 | 5.27 | 5.12 | 2.00 | 1.45 | 0.50 | 4.72 | 4.73 | 6.50 |
| | (e-2) | | | | | | | | | |
| | (e-3) | | | | | | | | | |
| | (x-1) | | | | | | | | | |
| | (x-2) | | | | | | | | | |
| | (y-1) | | | | | | | | | |
| | (f-1) | 7.5 | 7.5 | 4.5 | 7.3 | 7.2 | 7.2 | 7.9 | 15.0 | 7.8 |
| | (i-1) | 0.30 | 0.45 | 0.29 | 0.29 | 0.29 | 0.29 | 0.31 | 0.32 | 0.31 |
| Total content of component (d) (parts by mass) | | 20.30 | 20.33 | 19.73 | 19.67 | 19.57 | 19.38 | 26.77 | 19.69 | 24.28 |
| Phosphorus content (P) | | 1.30 | 1.40 | 1.40 | 1.35 | 1.40 | 1.40 | 1.40 | 1.40 | 1.29 |
| Mass ratio (E/P) | | 2.51 | 2.51 | 2.51 | 0.98 | 0.72 | 0.25 | 1.69 | 2.33 | 2.57 |

(continued)

| | Component (Symbol) | Example 10 | Example 11 | Example 12 | Example 13 | Example 14 | Example 15 | Example 16 | Example 17 | Example 18 |
|---|---|---|---|---|---|---|---|---|---|---|
| Evaluation results | Tracking resistance CTI value (V) | 250 | 275 | 275 | 275 | 250 | 250 | 300 | 275 | 275 |
| | Impact resistance Charpy impact strength ($kJ/m^2$) | 9.3 | 9.8 | 10.4 | 9.4 | 9.5 | 9.0 | 9.0 | 9.3 | 9.4 |
| | Flame retardancy (UL 94 V test) | V-0 | V-0 | V-0 | V-0 | V-0 | V-0 | V-0 | V-0 | V-0 |
| | Heat resistance DTUL (°C) | 130 | 117 | 118 | 118 | 118 | 119 | 104 | 118 | 109 |
| | Tensile strength (MPa) | 107.9 | 92.6 | 94.5 | 96.8 | 103.9 | 95.9 | 90.8 | 92.3 | 89.3 |
| | Flexural strength (MPa) | 155 | 143 | 147 | 157 | 156 | 157 | 149 | 150 | 146 |
| | Flexural modulus (MPa) | 4,312 | 4,319 | 4,322 | 4,588 | 4,522 | 4,590 | 4,596 | 4,681 | 4,478 |

Table 2-3

| | Component (Symbol) | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Composition of PPE resin composition (parts by mass) | (a-1) | 85.0 | 85.0 | 85.0 | 85.0 | 85.0 | 80.0 | 85.0 | 85.0 | 85.0 |
| | (b-1) | | 15.0 | | | | | | | |
| | (b-2) | 15.0 | | 15.0 | 15.0 | 15.0 | 20.0 | 15.0 | 15.0 | 15.0 |
| | (b-3) | | | | | | | | | |
| | (c-1) | 15.0 | 14.8 | 14.0 | 14.4 | 14.8 | 15.0 | 14.3 | 15.0 | 15.0 |
| | (d-1) | 9.77 | 9.63 | 9.09 | 9.35 | 9.63 | 9.77 | 9.30 | 9.77 | 9.77 |
| | (d-2) | 7.52 | 7.41 | 6.99 | 7.19 | 7.41 | 7.52 | 7.16 | 7.52 | 7.52 |
| | (d-3) | 3.01 | 1.48 | 2.80 | 2.88 | 2.96 | 3.01 | 2.86 | 3.01 | 3.01 |
| | (h-1) | 0.45 | 0.44 | 0.42 | 0.43 | 0.44 | 0.45 | 0.43 | 0.45 | 0.45 |
| | (g-1) | 1.50 | 1.48 | 1.40 | 1.44 | 0.00 | 1.50 | 1.43 | 1.50 | 1.50 |
| | (e-1) | | 5.19 | 4.89 | 5.04 | 5.18 | 5.26 | 0.20 | | |
| | (e-2) | | | | | | | | | |
| | (e-3) | | | | | | | | | |
| | (x-1) | 5.26 | | | | | | | | |
| | (x-2) | | | | | | | | 5.26 | |
| | (y-1) | | | | | | | | | 5.26 |
| | (f-1) | 7.5 | 7.4 | 0.0 | 2.9 | 7.4 | 7.5 | 7.2 | 7.5 | 7.5 |
| | (i-1) | 0.30 | 0.30 | 0.28 | 0.29 | 0.30 | 0.30 | 0.29 | 0.30 | 0.30 |
| Total content of component (d) (parts by mass) | | 20.30 | 18.52 | 18.88 | 19.42 | 20.00 | 20.30 | 19.32 | 20.30 | 20.30 |
| Phosphorus content (P) | | 1.29 | 1.40 | 1.40 | 1.40 | 1.40 | 1.44 | 1.40 | 1.40 | 1.40 |
| Mass ratio (E/P) | | 2.51 | 2.69 | 2.51 | 2.51 | 2.60 | 2.51 | 0.10 | 2.51 | 2.51 |

(continued)

| | Component (Symbol) | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Evaluation results | Tracking resistance CTI value (V) | 275 | 275 | 200 | 225 | 225 | 275 | 225 | 250 | 225 |
| | Impact resistance Charpy impact strength ($kJ/m^2$) | 8.3 | 9.8 | 9.6 | 10.2 | 10.4 | 10.1 | 8.9 | 8.8 | 7.9 |
| | Flame retardancy (UL 94 V test) | Poor | V-1 | V-0 | V-0 | V-1 | V-1 | V-0 | Poor | Poor |
| | Heat resistance DTUL (°C) | 115 | 122 | 120 | 119 | 119 | 113 | 120 | 118 | 117 |
| | Tensile strength (MPa) | 98.2 | 92.7 | 92.2 | 94.2 | 94.8 | 95.6 | 97.2 | 93.0 | 93.0 |
| | Flexural strength (MPa) | 150 | 145 | 139 | 144 | 145 | 145 | 158 | 147 | 144 |
| | Flexural modulus (MPa) | 4,477 | 4,299 | 4,166 | 4,222 | 4,363 | 4,133 | 4,579 | 4,443 | 4,239 |

It is to be understood that the present invention is not limited by the above-described embodiments and examples, and configurations obtained by appropriately combining the above-described components are also encompassed in the present invention. In addition, other embodiments, examples, operation techniques, and the like made by persons/entities such as those skilled in the art on the basis of the above-described embodiments are all included in the scope of the present invention.

Industrial Applicability

The PPE resin composition according to the present invention can simultaneously have high tracking resistance, excellent flame retardancy, and excellent impact resistance, and thus can be extremely suitably used for various molded articles such as battery unit housings.

## Claims

1. A polyphenylene ether resin composition that comprises at least a polyphenylene ether resin (a), the polyphenylene ether resin composition comprising:

    per 100 parts by mass of a polyphenylene ether-containing resin (A) containing more than 80 mass% of the polyphenylene ether resin (a), 5 to 25 parts by mass of an inorganic filler (c), 15 to 27 parts by mass of a phosphorus flame retardant (d), 0.3 to 7 parts by mass of a polyolefin resin (e) having an ethylene-derived skeleton, 3 to 20 parts by mass of a tracking resistance improver (f), and 0.5 to 3 parts by mass of a phosphorus stabilizer (g),
    wherein a mass ratio of the polyolefin resin (e) to a phosphorus component in the polyphenylene ether resin composition is 0.2 to 2.65, and
    a melt flow rate of the polyolefin resin (e) measured in conformity with JIS K7210 is 0.5 to 100 g/10 min under measurement conditions of a temperature of 190°C and a load of 2.16 kg.

2. The polyphenylene ether resin composition according to claim 1,
    wherein the polyphenylene ether-containing resin (A) contains 85 to 100 mass% of the polyphenylene ether resin (a) and 0 to 15 mass% of a styrene resin (b).

3. The polyphenylene ether resin composition according to claim 1 or 2,
    wherein the tracking resistance improver (f) contains at least one selected from an alkaline earth metal salt, a metal hydroxide, a nitrogen-containing compound, an inorganic acid metal compound, and a layered double hydroxide.

4. The polyphenylene ether resin composition according to claim 1 or 2,
    wherein the tracking resistance improver (f) is calcium carbonate.

5. The polyphenylene ether resin composition according to claim 1 or 2,
    wherein the inorganic filler (c) contains at least one selected from a glass fiber, mica, and talc.

6. A molded article comprising
    the polyphenylene ether resin composition according to claim 1 or 2.

7. The molded article according to claim 6,
    wherein the molded article is a battery unit housing.

**INTERNATIONAL SEARCH REPORT**

International application No. **PCT/JP2023/031095**

**A. CLASSIFICATION OF SUBJECT MATTER**

***C08L 71/12***(2006.01)i; ***C08K 3/013***(2018.01)i; ***C08K 3/26***(2006.01)i; ***C08K 5/521***(2006.01)i; ***C08K 5/524***(2006.01)i; ***C08L 23/04***(2006.01)i

FI: C08L71/12; C08K3/013; C08K3/26; C08K5/521; C08K5/524; C08L23/04

According to International Patent Classification (IPC) or to both national classification and IPC

**B. FIELDS SEARCHED**

Minimum documentation searched (classification system followed by classification symbols)

C08L1/00-101/16; C08K3/00-13/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2021/186252 A1 (SHPP GLOBAL TECHNOLOGIES B.V.) 23 September 2021 (2021-09-23)<br>claims, column "examples" (for example, [table 3B], [E10], [CE7]), etc. | 1-3, 5-7<br>4 |
| Y | JP 2012-131934 A (MITSUBISHI ENGINEERING PLASTICS CORP) 12 July 2012 (2012-07-12)<br>paragraph [0168], column "examples" (in particular, paragraph [0195]), etc. | 4 |
| Y | WO 2012/035976 A1 (MITSUBISHI ENGINEERING PLASTICS CORP) 22 March 2012 (2012-03-22)<br>paragraphs [0056], [0061], column "examples", etc. | 4 |
| A | JP 2019-73600 A (ASAHI KASEI CORP) 16 May 2019 (2019-05-16) | 1-7 |
| A | JP 2012-153832 A (ASAHI KASEI CHEMICALS CORP) 16 August 2012 (2012-08-16) | 1-7 |
| A | WO 2017/208945 A1 (ASAHI KASEI CORP) 07 December 2017 (2017-12-07) | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/031095**

**C. DOCUMENTS CONSIDERED TO BE RELEVANT**

| Category* | Citation of document, with indication, where appropriate, of the relevant passages | Relevant to claim No. |
|---|---|---|
| A | JP 2017-214492 A (ASAHI KASEI CORP) 07 December 2017 (2017-12-07) | 1-7 |
| A | WO 2012/111628 A1 (ASAHI KASEI CHEMICALS CORP) 23 August 2012 (2012-08-23) | 1-7 |
| A | JP 2021-17466 A (ASAHI KASEI CORP) 15 February 2021 (2021-02-15) | 1-7 |
| A | JP 8-259799 A (GENERAL ELECTRIC CO <GE>) 08 October 1996 (1996-10-08) | 1-7 |
| A | JP 2018-526512 A (SABIC GLOBAL TECHNOLOGIES B.V.) 13 September 2018 (2018-09-13) | 1-7 |
| A | JP 2014-534286 A (SABIC INNOVATIVE PLASTICS IP B.V) 18 December 2014 (2014-12-18) | 1-7 |
| A | JP 2014-515419 A (SABIC INNOVATIVE PLASTICS IP B.V) 30 June 2014 (2014-06-30) | 1-7 |
| A | US 2018/0072886 A1 (SABIC GLOBAL TECHNOLOGIES B.V.) 15 March 2018 (2018-03-15) | 1-7 |
| A | JP 2017-514970 A (SABIC GLOBAL TECHNOLOGIES B.V.) 08 June 2017 (2017-06-08) | 1-7 |
| A | JP 2015-533925 A (SABIC GLOBAL TECHNOLOGIES B.V.) 26 November 2015 (2015-11-26) | 1-7 |
| A | CN 114561094 A (JINSHUI SCIENCE AND TECHNOLOGY STOCK LIMITED COMPANY) 31 May 2022 (2022-05-31) | 1-7 |
| P, A | WO 2022/255015 A1 (MITSUBISHI ENGINEERING PLASTICS CORP) 08 December 2022 (2022-12-08) | 1-7 |

Form PCT/ISA/210 (second sheet) (January 2015)

**INTERNATIONAL SEARCH REPORT**
**Information on patent family members**

International application No.
**PCT/JP2023/031095**

| Patent document cited in search report | Publication date (day/month/year) | Patent family member(s) | Publication date (day/month/year) |
|---|---|---|---|
| WO 2021/186252 A1 | 23 September 2021 | JP 2023-517699 A | |
| | | US 2023/0174781 A1 | |
| | | CN 115315460 A | |
| | | KR 10-2022-0155567 A | |
| JP 2012-131934 A | 12 July 2012 | (Family: none) | |
| WO 2012/035976 A1 | 22 March 2012 | EP 2617772 A1 | |
| | | paragraphs [0057], [0062], column "examples", etc. | |
| | | CN 103108917 A | |
| | | KR 10-2013-0102561 A | |
| JP 2019-73600 A | 16 May 2019 | CN 109666283 A | |
| JP 2012-153832 A | 16 August 2012 | (Family: none) | |
| WO 2017/208945 A1 | 07 December 2017 | US 2019/0185665 A1 | |
| | | EP 3467034 A1 | |
| | | CN 108884313 A | |
| | | TW 201809137 A | |
| JP 2017-214492 A | 07 December 2017 | (Family: none) | |
| WO 2012/111628 A1 | 23 August 2012 | US 2014/0170900 A1 | |
| | | EP 2677552 A1 | |
| | | CN 103348494 A | |
| | | TW 201244136 A | |
| JP 2021-17466 A | 15 February 2021 | CN 112239592 A | |
| JP 8-259799 A | 08 October 1996 | EP 719833 A2 | |
| JP 2018-526512 A | 13 September 2018 | US 2018/0291200 A1 | |
| | | WO 2017/033080 A1 | |
| | | CN 107922728 A | |
| | | KR 10-2018-0044971 A | |
| JP 2014-534286 A | 18 December 2014 | US 2013/0078502 A1 | |
| | | WO 2013/048713 A1 | |
| | | CN 103842439 A | |
| | | KR 10-2014-0077185 A | |
| JP 2014-515419 A | 30 June 2014 | US 2012/0298548 A1 | |
| | | WO 2012/162017 A2 | |
| | | CN 103562313 A | |
| | | KR 10-2014-0027286 A | |
| US 2018/0072886 A1 | 15 March 2018 | WO 2016/187791 A1 | |
| | | CN 107849294 A | |
| JP 2017-514970 A | 08 June 2017 | US 2016/0009902 A1 | |
| | | WO 2015/171293 A1 | |
| | | KR 10-2017-0005055 A | |
| | | CN 106459583 A | |
| JP 2015-533925 A | 26 November 2015 | US 2014/0128522 A1 | |
| | | US 2014/0243460 A1 | |
| | | US 2014/0243461 A1 | |
| | | WO 2014/074466 A1 | |
| | | CN 104704061 A | |
| | | KR 10-2015-0082511 A | |
| CN 114561094 A | 31 May 2022 | (Family: none) | |

Form PCT/ISA/210 (patent family annex) (January 2015)

**INTERNATIONAL SEARCH REPORT**
**Information on patent family members**

International application No.
**PCT/JP2023/031095**

| Patent document cited in search report | Publication date (day/month/year) | Patent family member(s) | Publication date (day/month/year) |
|---|---|---|---|
| WO 2022/255015 A1 | 08 December 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019137742 A
- JP 2005344065 A
- JP H0328210 A